# EUROPEAN PATENT SPECIFICATION

(11) **EP 4 187 936 B1**
(45) Date of publication and mention of the grant of the patent: **28.10.2026**
(21) Application number: 20947779.3
(22) Date of filing: 30.07.2020
(51) Int. Cl.: H04W 4/06

(54) **COMMUNICATION METHOD, APPARATUS, AND SYSTEM**
KOMMUNIKATIONSVERFAHREN, -VORRICHTUNG UND -SYSTEM
PROCÉDÉ, APPAREIL ET SYSTÈME DE COMMUNICATION

(43) Date of publication of application: 31.05.2023
(73) Proprietor: Huawei Technologies Co., Ltd., Shenzhen, Guangdong 518129 (CN)
(72) Inventor: PENG, Wenjie, Shenzhen, Guangdong 518129 (CN)
(74) Representative: Maiwald GmbH
(86) International application number: PCT/CN2020/105988
(87) International publication number: WO 2022/021251

(56) References cited:
- WO-A1-2008/069410
- CN-A- 105 409 254
- CN-A- 107 211 297
- CN-A- 110 602 654
- US-A1- 2018 234 808
- ZTE: "Discussion on the system information delivery", vol. RAN WG2, no. Hangzhou, China; 20170515 - 20170519, 14 May 2017 (2017-05-14), XP051275182, Retrieved from the Internet <URL:http://www.3gpp.org/ftp/Meetings_3GPP_SYNC/RAN2/Docs/> [retrieved on 20170514]

## Description

### TECHNICAL FIELD

This application relates to the field of wireless communication technologies, and in particular, to communication methods, an apparatus, anda computer-readable storage medium.

### BACKGROUND

A long term evolution (long term evolution, LTE) system supports transmission of multicast broadcast services (multicast broadcast services, MBSs). A network device may broadcast configuration information of an MBS and data of the MBS within a coverage area of the network device. A user equipment located in the coverage area of the network device may receive the configuration information of the MBS, and determine, based on the configuration information of the MBS, an identifier of the data of the MBS transmitted by the network device, and the like. If the MBS transmitted by the network device includes an MBS that the user equipment is interested in, the user equipment may establish a multimedia broadcast multicast service point to multipoint radio bearer (multimedia broadcast multicast service point to multipoint radio bearer, MRB) with the network device based on the configuration information of the MBS, so as to receive data of the MBS that the user equipment is interested in.

A user equipment-to-network relay (User Equipment-to-Network relay) technology is a technology that can effectively improve network coverage. Network elements involved in the UE-to-Network relay scenario include a network device, a relay user equipment (relay user equipment, relay UE), and a remote user equipment (remote ue). A radio resource control (radio resource control, RRC) connection exists between the network device and the relay user equipment, a sidelink (sidelink, SL) unicast connection exists between the relay user equipment and the remote user equipment, and the remote user equipment may access the network device by using the relay user equipment, to obtain a service from the network device. Downlink transmission is used as an example. The network device may send, to the relay user equipment, data to be sent to the remote user equipment, and the relay user equipment forwards the data to the remote user equipment.

The network device sends the data of the MBS in a broadcast or multicast manner. When the remote user equipment is outside the coverage area of the network device, no unicast connection is established between the remote user equipment and the network device for the MBS, and the relay user equipment does not forward, to the remote user equipment, the data of the MBS broadcast by the network device. The remote user equipment cannot receive the data of the MBS from the network device.
ZTE: "Discussion on the system information delivery", 3GPP DRAFT; R2-1704637 DISCUSSION ON SYSTEM INFORMATION DELIVERY, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANC, vol. RAN WG2, no. Hangzhou, China; 20170515 - 20170519 14 May 2017, discusses resuing in R15 an MBMS forwarding mechanism defined in R13.
US 2018/234808 A1 describes A radio terminal that is a relay terminal configured to perform a UE-to-Network relay in a proximity service. The radio terminal comprises a controller configured to transmit, to a remote terminal configured to communicate with the relay terminal by the UE-to-Network relay, Multimedia Broadcast Multicast Service (MBMS) reception information related to whether or not the radio terminal can receive an MBMS service.

### SUMMARY

Embodiments of this application provide a communication method, apparatus, and system, so that a remote user equipment can receive, by using a relay user equipment, data of an MBS broadcast by a network device. The invention is set out in the appended independent claims, wherein further embodiments are set out in the appended dependent claims.

According to a first aspect, an embodiment of this application provides a communication method. The method may be performed by a second user equipment, or may be performed by a component (for example, a processor, a chip, or a chip system) of the second user equipment. In the method, the second user equipment receives first information from a first user equipment, where the first information includes an identifier of a first MBS, and the first MBS is an MBS that the first user equipment is interested in; and the second user equipment sends a first message to the first user equipment, where the first message includes first configuration information, the first configuration information is for configuring a first SL radio bearer between the second user equipment and the first user equipment, and the first SL radio bearer is for transmitting data of the first MBS.

In the foregoing technical solution, the first user equipment may report, to the second user equipment, an identifier of the MBS that the first user equipment is interested in, so that the second user equipment can listen to and receive, based on the identifier of the first MBS, the data that is of the MBS that the first user equipment is interested in and that is broadcast by a network device. The second user equipment may send the first configuration information to the first user equipment, so that the first user equipment can establish the first SL radio bearer with the second user equipment based on the first configuration information. The first SL radio bearer is for transmitting the data of the first MBS, so that the first user equipment can successfully receive the data of the first MBS of the network device through the first SL radio bearer. For example, the foregoing technical solution can be used to resolve a problem that in a UE-to-Network relay scenario, the remote user equipment cannot receive the data of the MBS broadcast by the network device, because as an intermediate node between the network device and the remote user equipment, a relay user equipment only passively forwards the data of the MBS broadcast by the network device, and does not actively forward the data of the MBS broadcast by the network device to the remote user equipment.

In a possible design, the method further includes: The second user equipment sends first indication information to the first user equipment when a first cell supports the first MBS, where the first indication information indicates that the first cell supports the first MBS, and the first cell is a serving cell of the second user equipment. Alternatively, the second user equipment sends second indication information to the first user equipment when a first cell does not support the first MBS, the second indication information indicates the first cell does not support the first MBS, and the first cell is a serving cell of the second user equipment.

In the foregoing technical solution, the second user equipment may notify, by using the first indication information (or the second indication information), the first user equipment that the first cell supports the first MBS (or does not support the first MBS). This can reduce a delay in waiting, by the first user equipment, for a feedback response of the second user equipment. For example, when the first cell does not support the first MBS, if the second user equipment does not send the second indication information to the first user equipment, the first user equipment may wait for a feedback response of the second user equipment until time is timed out.

In a possible design, the method further includes: The second user equipment receives second configuration information from a network device, where the second configuration information is for receiving data of a second MBS, the second MBS is an MBS supported by a first cell, and the first cell is a serving cell of the second user equipment. The second user equipment determines, based on the second configuration information, that the first cell supports the first MBS or does not support the first MBS.

In the foregoing technical solution, the second user equipment may determine, by receiving the second configuration information from the network device, that the first cell supports the first MBS or does not support the first MBS. For example, if the second MBS includes the first MBS, the second user equipment may determine that the first cell supports the first MBS. Alternatively, if the second MBS does not include the first MBS, the second user equipment may determine that the first cell does not support the first MBS.

In a possible design, before the receiving first information from a first user equipment, the method further includes: The second user equipment receives second configuration information from a network device, where the second configuration information is for receiving data of a second MBS, the second MBS is an MBS supported by the first cell, and the first cell is a serving cell of the second user equipment. The second user equipment sends second information to the first user equipment, where the second information includes an identifier of the second MBS.

In the foregoing technical solution, the second user equipment may send, to the first user equipment, the identifier of the MBS supported by the first cell, so that the first user equipment may determine, based on the MBS supported by the first cell, whether there is an MBS that the first user equipment is interested in. For example, before the first user equipment establishes a unicast connection to the second user equipment, the second user equipment may broadcast the second information to surrounding user equipments in a discovery process, and after receiving the second information, the first user equipment may determine whether there is an MBS that the first user equipment is interested in, and determine and/or select the second user equipment that establishes the unicast connection to the first user equipment. Further, after the first user equipment establishes the unicast connection to the second user equipment, the first user equipment may send the first information to the second user equipment, so that the second user equipment listens to and receives the data of the first MBS broadcast by the network device, and forwards the data of the first MBS to the first user equipment.

In a possible design, the method further includes: The second user equipment sends a second message to the network device, where the second message includes third indication information, and the third indication information indicates the first MBS. The second user equipment receives a third message from the network device, where the third message includes third configuration information, and the third configuration information is for configuring the first SL radio bearer.

In the foregoing technical solution, regardless of whether the first cell supports the first MBS or does not support the first MBS, the second user equipment may indicate, to the network device, the MBS that the first user equipment is interested in, so that the network device configures, for the first user equipment, the third configuration information for establishing the first SL radio bearer. The second user equipment receives, from the network device, the third configuration information for configuring the first SL radio bearer, and then the second user equipment may send the first configuration information to the user equipment based on the third configuration information, so that the first user equipment may establish the first SL radio bearer based on the first configuration information, to receive the data of the first MBS broadcast by the network device. The third indication information may be the identifier of the first MBS, an index of the first MBS, a number of the first MBS, or the like. Optionally, the third configuration information is the first configuration information.

In a possible design, the third message further includes fourth configuration information, where the fourth configuration information is for configuring a first radio bearer between the network device and the second user equipment, and the first radio bearer is for transmitting the data of the first MBS.

In the foregoing technical solution, when the first cell does not support the first MBS, the network device may further configure, for the second user equipment, the fourth configuration information for establishing the first radio bearer, so that the second user equipment can receive the data of the first MBS. For example, the third message sent by the network device to the second user equipment may further include the fourth configuration information. For another example, the network device may send the fourth configuration information to the second user equipment by using dedicated signaling (for example, RRC signaling or MAC signaling). Further, the second user equipment may send the received data of the first MBS to the first user equipment.

In a possible design, the method further includes: The second user equipment receives the data of the first MBS from the network device; and the second user equipment sends the data of the first MBS to the first user equipment through the first SL radio bearer.

In the foregoing technical solution, the second user equipment may send the received data of the first MBS to the first user equipment through the first SL radio bearer.

In a possible design, the method further includes: The second user equipment obtains at least two pieces of the data of the first MBS from a first protocol layer entity based on the data of the first MBS received from a bottom layer entity, where the first protocol layer entity is any one of a first packet data convergence protocol PDCP entity, a radio link control layer protocol RLC entity, or an adaptation layer entity. The second user equipment sends one of the at least two pieces of the data of the first MBS to an upper layer entity of the first protocol layer entity.

In the foregoing technical solution, when the second user equipment is also interested in the first MBS, or at least two first user equipments are interested in the first MBS, the second user equipment may perform, in the first protocol layer entity, a replication operation on the data of the first MBS received from the bottom layer entity, to obtain at least two pieces of the data of the first MBS. For example, when the second user equipment is interested in the first MBS, the second user equipment may send one of the at least two pieces of the data of the first MBS to the upper layer entity of the first protocol layer entity, so that the second user equipment receives the data of the first MBS. Further, the second user equipment may further send remaining data of the first MBS to the first user equipment, so that the first user equipment can receive the data of the first MBS. For another example, when the at least two first user equipments are interested in the first MBS, the second user equipment may separately send each of the at least two pieces of the data of the first MBS to the at least two first user equipments, so that the at least two first user equipments can receive the data of the first MBS.

In a possible design, the second configuration information includes one or more of the following: the identifier of the second MBS, information about a first time-frequency resource, or information about a first multimedia broadcast multicast service point to multipoint radio bearer MRB, where the first time-frequency resource is for carrying the second MBS, the first MRB is for transmitting the data of the second MBS, the information about the first MRB includes first packet data convergence protocol PDCP configuration information, the first PDCP configuration information is for configuring a second PDCP entity, and the second PDCP entity is for receiving the data of the second MBS.

In the foregoing technical solution, the second user equipment may receive, by using the second configuration information, the data of the second MBS broadcast by the network device.

In a possible design, the first message further includes second PDCP configuration information, the second PDCP configuration information is for configuring a third PDCP entity, and the third PDCP entity is for receiving the data of the first MBS.

In the foregoing technical solution, the first message may further include the second PDCP configuration information for configuring the third PDCP entity, so that the first user equipment can successfully receive the data of the first MBS broadcast by the network device. For example, if the data of the first MBS broadcast by the network device is processed by a PDCP entity, the first user equipment needs to establish a peer third PDCP entity, so that the first user equipment can successfully receive the data of the first MBS broadcast by the network device.

According to a second aspect, which is not covered by the claims, an example of this application provides a communication method. The method may be performed by a network device, or may be performed by a component (for example, a processor, a chip, or a chip system) of the network device. In the method, the network device receives a second message from a second user equipment, where the second message includes third indication information, the third indication information indicates a first MBS, and the first MBS is an MBS that a first user equipment is interested in; and the network device sends a third message to the second user equipment, where the third message includes third configuration information, the third configuration information is for configuring a first sidelink SL radio bearer between the first user equipment and the second user equipment, and the first SL radio bearer is for transmitting data of the first MBS.

In a possible design, the third message further includes fourth configuration information, the fourth configuration information is for configuring a first radio bearer between the second user equipment and the network device, and the first radio bearer is for transmitting the data of the first MBS.

In a possible design, the method further includes: The network device sends second configuration information to the second user equipment, where the second configuration information is for receiving data of a second MBS, the second MBS is an MBS supported by a first cell, and the first cell is a serving cell of the second user equipment.

In a possible design, the second configuration information includes one or more of the following: an identifier of the second MBS, information about a first time-frequency resource, or information about a first multimedia broadcast multicast service point to multipoint radio bearer MRB, where the first time-frequency resource is for carrying the second MBS, the first MRB is for transmitting the data of the second MBS, the information about the first MRB includes first packet data convergence protocol PDCP configuration information, the first PDCP configuration information is for configuring a second PDCP entity, and the second PDCP entity is for receiving the data of the second MBS.

In a possible design, the third message further includes second PDCP configuration information, the second PDCP configuration information is for configuring a third PDCP entity, and the third PDCP entity is for receiving the data of the first MBS.

According to a third aspect, which is not covered by the claims, an example of this application provides a communication method. The method may be performed by a first user equipment, or may be performed by a component (for example, a processor, a chip, or a chip system) of the first user equipment. In the method, the first user equipment sends first information to a second user equipment, where the first information includes an identifier of a first MBS, and the first MBS is an MBS that the first user equipment is interested in. The first user equipment receives a first message from the second user equipment, where the first message includes first configuration information, the first configuration information is for configuring a first sidelink SL radio bearer between the second user equipment and the first user equipment, and the first SL radio bearer is for transmitting data of the first MBS.

In a possible design, before the sending first information to the second user equipment, the method further includes: The first user equipment receives second information from the second user equipment, where the second information includes an identifier of a second MBS, the second MBS is an MBS supported by a first cell, and the first cell is a serving cell of the second user equipment. The first user equipment determines, based on the second information, that the first cell supports the first MBS or does not support the first MBS.

In a possible design, the method further includes: The first user equipment receives first indication information from the second user equipment, where the first indication information indicates that the first cell supports the first MBS, and the first cell is a serving cell of the second user equipment. Alternatively, the first user equipment receives second indication information from the second user equipment, where the second indication information indicates that the first cell does not support the first MBS, and the first cell is a serving cell of the second user equipment.

In a possible design, the first message further includes second PDCP configuration information, the second PDCP configuration information is for configuring a third PDCP entity, and the third PDCP entity is for receiving the data of the first MBS.

In a possible design, the fifth configuration information includes second PDCP configuration information, the second PDCP configuration information is for configuring a third PDCP entity, and the third PDCP entity is for receiving the data of the first MBS.

For beneficial effects of the second aspect and the third aspect and the implementations thereof, refer to the descriptions of the beneficial effects of the first aspect and the implementations thereof.

According to a fourth aspect, an embodiment of this application provides a communication method. The method may be performed by a second user equipment, or may be performed by a component (for example, a processor, a chip, or a chip system) of the second user equipment. In the method, the second user equipment receives first information from a first user equipment, where the first information includes an identifier of a first MBS, and the first MBS is an MBS that the first user equipment is interested in; the second user equipment sends the first information to a network device; the second user equipment receives fifth configuration information from the network device, where the fifth configuration information is used by the first user equipment to receive data of the first MBS; and the second user equipment sends the fifth configuration information to the first user equipment.

In the foregoing technical solution, the first user equipment may report, to the second user equipment, an identifier of the MBS that the first user equipment is interested in, and the second user equipment sends the identifier of the MBS that the first user equipment is interested in to the network device, so that the network device determines the MBS that the first user equipment is interested in. After receiving the identifier of the MBS that the first user equipment is interested in, the network device may send the fifth configuration information to the first user equipment by using the second user equipment. The fifth configuration information is used by the first user equipment to receive the data of the first MBS, so that the first user equipment receives, based on the fifth configuration information, the data of the first MBS broadcast by the network device. For example, the foregoing technical solution can be used to resolve a problem that in a UE-to-Network relay scenario, the remote user equipment cannot receive the data of the MBS broadcast by the network device, because as an intermediate node between the remote user equipment and the network device, a relay user equipment only passively forwards the data of the MBS broadcast by the network device, and does not actively forward the data of the MBS broadcast by the network device to the remote user equipment.

In a possible design, the method further includes: The second user equipment receives sixth configuration information from the network device, where the sixth configuration information is used by the second user equipment to receive the data of the first MBS.

In the foregoing technical solution, when the first cell does not support the first MBS, the network device may further configure, for the second user equipment, the sixth configuration information for receiving the data of the first MBS, so that after the second user equipment receives the sixth configuration information from the network device, the second user equipment may receive, based on the sixth configuration information, the data of the first MBS broadcast by the network device. Further, the second user equipment may send the data of the first MBS to the first user equipment, so that the first user equipment can receive, by using the second user equipment, the data of the MBS broadcast by the network device.

In a possible design, the method further includes: The second user equipment receives the data of the first MBS from the network device based on the sixth configuration information; and the second user equipment sends the data of the first MBS to the first user equipment based on the fifth configuration information.

In the foregoing technical solution, the second user equipment may send the data of the first MBS to the first user equipment by using the fifth configuration information.

In a possible design, the method further includes: The second user equipment obtains at least two pieces of the data of the first MBS from a first protocol layer entity based on the data of the first MBS received from a bottom layer entity, where the first protocol layer entity is any one of a first packet data convergence protocol PDCP entity, a radio link control layer protocol RLC entity, or an adaptation layer entity. The second user equipment sends one of the at least two pieces of the data of the first MBS to an upper layer entity of the first protocol layer entity.

In the foregoing technical solution, when the second user equipment is also interested in the first MBS, or at least two first user equipments are interested in the first MBS, the second user equipment may perform, in the first protocol layer entity, a replication operation on the data of the first MBS received from the bottom layer entity, to obtain at least two pieces of the data of the first MBS. For example, when the second user equipment is also interested in the first MBS, the second user equipment may send one of the at least two pieces of the data of the first MBS to the upper layer entity of the first protocol layer entity, so that the second user equipment receives the data of the first MBS. Further, the second user equipment may further send remaining data of the first MBS to the first user equipment, so that the first user equipment can receive the data of the first MBS. For another example, when the at least two first user equipments are interested in the first MBS, the second user equipment may separately send each of the at least two pieces of the data of the first MBS to the at least two first user equipments, so that the at least two first user equipments can receive the data of the first MBS.

In a possible design, the sixth configuration information includes one or more of the following: an identifier of the first MBS, information about a second time-frequency resource, or information about a second multimedia broadcast multicast service point to multipoint radio bearer MRB, where the second time-frequency resource is for carrying the first MBS, the second MRB is for transmitting the data of the first MBS, the information about the second MRB includes third PDCP configuration information, the third PDCP configuration information is for configuring a first PDCP entity, and the first PDCP entity is for receiving the data of the first MBS.

In the foregoing technical solution, the sixth configuration information may include the third PDCP configuration information for configuring the first PDCP entity, so that the second user equipment can successfully receive the data of the first MBS broadcast by the network device. For example, if the data of the first MBS broadcast by the network device is processed by a PDCP entity, the second user equipment needs to establish a peer first PDCP entity, so that the second user equipment can successfully receive the data of the first MBS broadcast by the network device.

In a possible design, the fifth configuration information includes second PDCP configuration information, the second PDCP configuration information is for configuring a third PDCP entity, and the third PDCP entity is for receiving the data of the first MBS.

In the foregoing technical solution, the fifth configuration information may further include the second PDCP configuration information for configuring the third PDCP entity, so that the first user equipment can successfully receive the data of the first MBS broadcast by the network device. For example, if the data of the first MBS broadcast by the network device is processed by a PDCP entity, the first user equipment needs to establish a peer third PDCP entity, so that the first user equipment can successfully receive the data of the first MBS broadcast by the network device.

According to a fifth aspect, which is not covered by the claims, an example of this application provides a communication method. The method may be performed by a network device, or may be performed by a component (for example, a processor, a chip, or a chip system) of the network device. In the method, a network device receives first information from a first user equipment by using a second user equipment, where the first information includes an identifier of a first MBS, and the first MBS is an MBS that the first user equipment is interested in; and the network device sends fifth configuration information to the first user equipment by using the second user equipment, where the fifth configuration information is used by the first user equipment to receive data of the first MBS.

In a possible design, the method further includes: The network device sends sixth configuration information to the second user equipment, where the sixth configuration information is used by the second user equipment to receive the data of the first MBS.

In a possible design, the sixth configuration information includes one or more of the following: an identifier of the first MBS, information about a second time-frequency resource, or information about a second multimedia broadcast multicast service point to multipoint radio bearer MRB, where the second time-frequency resource is for carrying the first MBS, the second MRB is for transmitting the data of the first MBS, the information about the second MRB includes third PDCP configuration information, the third PDCP configuration information is for configuring a first PDCP entity, and the first PDCP entity is for receiving the data of the first MBS.

In a possible design, the fifth configuration information includes second PDCP configuration information, the second PDCP configuration information is for configuring a third PDCP entity, and the third PDCP entity is for receiving the data of the first MBS.

According to a sixth aspect, which is not covered by the claims, an example of this application provides a communication method. The method may be performed by a first user equipment, or may be performed by a component (for example, a processor, a chip, or a chip system) of the first user equipment. In the method, the first user equipment sends first information to a network device by using a second user equipment, where the first information includes an identifier of a first MBS, and the first MBS is an MBS that the first user equipment is interested in; and the first user equipment receives fifth configuration information from the network device by using the second user equipment, where the fifth configuration information is used by the first user equipment to receive data of the first MBS.

In a possible design, the fifth configuration information includes second PDCP configuration information, the second PDCP configuration information is for configuring a third PDCP entity, and the third PDCP entity is for receiving the data of the first MBS.

For beneficial effects of the fifth aspect and the sixth aspect and the implementations of the fifth aspect and the sixth aspect, refer to descriptions of beneficial effects of the method in the fourth aspect and implementations of the fourth aspect.

According to a seventh aspect, an embodiment of this application provides a communication apparatus. The communication apparatus includes a processor, configured to implement the method performed by the second user equipment in the foregoing first aspect. The communication apparatus may further include a memory, configured to store program instructions and data. The memory is coupled to the processor. The processor may invoke and execute the program instructions stored in the memory, to implement any method performed by the second user equipment according to the first aspect. The communication apparatus may further include a transceiver, where the transceiver is used by the communication apparatus to communicate with another device. For example, the another device is a first user equipment or a network device.

In a possible design, the communication apparatus includes a transceiver, configured to: receive first information from a first user equipment, where the first information includes an identifier of a first MBS, and the first MBS is an MBS that the first user equipment is interested in; and send a first message to the first user equipment, where the first message includes first configuration information, the first configuration information is for configuring a first SL radio bearer between the second user equipment and the first user equipment, and the first SL radio bearer is for transmitting data of the first MBS.

In a possible design, the communication apparatus includes a transceiver, configured to: send first indication information to the first user equipment when a first cell supports the first MBS, where the first indication information indicates that the first cell supports the first MBS, and the first cell is a serving cell of the second user equipment; or send second indication information to the first user equipment when a first cell does not support the first MBS, where the second indication information indicates that the first cell does not support the first MBS, and the first cell is a serving cell of the second user equipment.

In a possible design, the communication apparatus includes a transceiver and a processor. The transceiver is configured to receive second configuration information from a network device, the second configuration information is for receiving data of a second MBS, the second MBS is an MBS supported by the first cell, and the first cell is a serving cell of the second user equipment. The processor is configured to determine, based on the second configuration information, that the first cell supports the first MBS or does not support the first MBS.

In a possible design, the communication apparatus includes a transceiver, configured to: before receiving the first information from the first user equipment, receive second configuration information from a network device, where the second configuration information is for receiving data of a second MBS, the second MBS is an MBS supported by a first cell, and the first cell is a serving cell of the second user equipment; and send second information to the first user equipment, where the second information includes an identifier of the second MBS.

In a possible design, the communication apparatus includes a transceiver, configured to send a second message to the network device, where the second message includes third indication information, and the third indication information indicates the first MBS; and receive a third message from the network device, where the third message includes third configuration information, and the third configuration information is for configuring the first SL radio bearer.

In a possible design, the third message further includes fourth configuration information, where the fourth configuration information is for configuring a first radio bearer between the network device and the second user equipment, and the first radio bearer is for transmitting the data of the first MBS.

In a possible design, the communication apparatus includes a transceiver, configured to: receive the data of the first MBS from the network device; and send the data of the first MBS to the first user equipment through the first SL radio bearer.

In a possible design, the communication apparatus includes a transceiver and a processor. The processor is configured to obtain at least two pieces of the data of the first MBS from a first protocol layer entity based on the data of the first MBS received from a bottom layer entity, where the first protocol layer entity is any one of a first packet data convergence protocol PDCP entity, a radio link control layer protocol RLC entity, or an adaptation layer entity. The transceiver is configured to send one of the at least two pieces of the data of the first MBS to an upper layer entity of the first protocol layer entity.

In a possible design, the second configuration information includes one or more of the following: the identifier of the second MBS, information about a first time-frequency resource, or information about a first multimedia broadcast multicast service point to multipoint radio bearer MRB, where the first time-frequency resource is for carrying the second MBS, the first MRB is for transmitting the data of the second MBS, the information about the first MRB includes first packet data convergence protocol PDCP configuration information, the first PDCP configuration information is for configuring a second PDCP entity, and the second PDCP entity is for receiving the data of the second MBS.

In a possible design, the first message further includes second PDCP configuration information, the second PDCP configuration information is for configuring a third PDCP entity, and the third PDCP entity is for receiving the data of the first MBS.

According to an eighth aspect, which is not covered by the claims, an example of this application provides a communication apparatus. The communication apparatus includes a processor, configured to implement the method performed by the network device in the second aspect. The communication apparatus may further include a memory, configured to store program instructions and data. The memory is coupled to the processor. The processor may invoke and execute the program instructions stored in the memory, to implement any method performed by the network device according to the foregoing second aspect. The communication apparatus may further include a transceiver, where the transceiver is used by the communication apparatus to communicate with another device. For example, the another device is a second user equipment.

In a possible design, the communication apparatus includes a transceiver, configured to receive a second message from a second user equipment, where the second message includes third indication information, the third indication information indicates a first MBS, and the first MBS is an MBS that a first user equipment is interested in; and send a third message to the second user equipment, where the third message includes third configuration information, the third configuration information is for configuring a first sidelink SL radio bearer between the first user equipment and the second user equipment, and the first SL radio bearer is for transmitting data of the first MBS.

In a possible design, the third message further includes fourth configuration information, the fourth configuration information is for configuring a first radio bearer between the second user equipment and a network device, and the first radio bearer is for transmitting the data of the first MBS.

In a possible design, the communication apparatus includes a transceiver, configured to send second configuration information to the second user equipment, where the second configuration information is for receiving data of a second MBS, the second MBS is an MBS supported by a first cell, and the first cell is a serving cell of the second user equipment.

In a possible design, the second configuration information includes one or more of the following: an identifier of the second MBS, information about a first time-frequency resource, or information about a first multimedia broadcast multicast service point to multipoint radio bearer MRB, where the first time-frequency resource is for carrying the second MBS, the first MRB is for transmitting the data of the second MBS, the information about the first MRB includes first packet data convergence protocol PDCP configuration information, the first PDCP configuration information is for configuring a second PDCP entity, and the second PDCP entity is for receiving the data of the second MBS.

In a possible design, the third message further includes second PDCP configuration information, the second PDCP configuration information is for configuring a third PDCP entity, and the third PDCP entity is for receiving the data of the first MBS.

According to a ninth aspect, which is not covered by the claims, an example of this application provides a communication apparatus. The communication apparatus includes a processor, configured to implement the method performed by the first user equipment in the foregoing third aspect. The communication apparatus may further include a memory, configured to store program instructions and data. The memory is coupled to the processor. The processor may invoke and execute the program instructions stored in the memory, to implement any method performed by the first user equipment according to the third aspect. The communication apparatus may further include a transceiver, where the transceiver is used by the communication apparatus to communicate with another device. For example, the another device is a second user equipment.

In a possible design, the communication apparatus includes a transceiver, configured to: send first information to a second user equipment, where the first information includes an identifier of a first MBS, and the first MBS is an MB S that a first user equipment is interested in; and receive a first message from the second user equipment, where the first message includes first configuration information, the first configuration information is for configuring a first sidelink SL radio bearer between the second user equipment and the first user equipment, and the first SL radio bearer is for transmitting data of the first MBS.

In a possible design, the communication apparatus includes a processor and a transceiver. Before sending the first information to the second user equipment, the transceiver is configured to receive second information from the second user equipment, where the second information includes an identifier of a second MBS, the second MBS is an MBS supported by a first cell, and the first cell is a serving cell of the second user equipment. The processor is configured to determine, based on the second information, that the first cell supports the first MBS or does not support the first MBS.

In a possible design, the communication apparatus includes a transceiver, used by the first user equipment to: receive first indication information from the second user equipment, where the first indication information indicates that the first cell supports the first MBS, and the first cell is a serving cell of the second user equipment; or receive second indication information from the second user equipment, where the second indication information indicates that the first cell does not support the first MBS, and the first cell is a serving cell of the second user equipment.

In a possible design, the first message further includes second PDCP configuration information, the second PDCP configuration information is for configuring a third PDCP entity, and the third PDCP entity is for receiving data of the first MBS.

In a possible design, the fifth configuration information includes second PDCP configuration information, the second PDCP configuration information is for configuring a third PDCP entity, and the third PDCP entity is for receiving the data of the first MBS.

According to a tenth aspect, an embodiment of this application provides a communication apparatus. The communication apparatus includes a processor, configured to implement the method performed by the second user equipment in the foregoing fourth aspect. The communication apparatus may further include a memory, configured to store program instructions and data. The memory is coupled to the processor. The processor may invoke and execute the program instructions stored in the memory, to implement any method performed by the second user equipment according to the fourth aspect. The communication apparatus may further include a transceiver, where the transceiver is used by the communication apparatus to communicate with another device. For example, the another device is a first user equipment or a network device.

In a possible design, the communication apparatus includes a transceiver, configured to: receive first information from a first user equipment, where the first information includes an identifier of a first MBS, and the first MBS is an MBS that the first user equipment is interested in; send the first information to a network device; receive fifth configuration information from the network device, where the fifth configuration information is used by the first user equipment to receive data of the first MBS; and send the fifth configuration information to the first user equipment.

In a possible design, the communication apparatus includes a transceiver, configured to receive sixth configuration information from the network device, where the sixth configuration information is used by the second user equipment to receive the data of the first MBS.

In a possible design, the communication apparatus includes a processor and a transceiver. The processor is configured to receive the data of the first MBS from the network device based on the sixth configuration information by using the transceiver. The processor is configured to send the data of the first MBS to the first user equipment based on the fifth configuration information by using the transceiver.

In a possible design, the communication apparatus includes a processor and a transceiver. The processor is configured to obtain at least two pieces of the data of the first MBS from a first protocol layer entity based on the data of the first MBS received from a bottom layer entity, where the first protocol layer entity is any one of a first packet data convergence protocol PDCP entity, a radio link control layer protocol RLC entity, or an adaptation layer entity. The transceiver is configured to send one of the at least two pieces of the data of the first MBS to an upper layer entity of the first protocol layer entity.

In a possible design, the sixth configuration information includes one or more of the following: an identifier of the first MBS, information about a second time-frequency resource, or information about a second multimedia broadcast multicast service point to multipoint radio bearer MRB, where the second time-frequency resource is for carrying the first MBS, the second MRB is for transmitting the data of the first MBS, the information about the second MRB includes third PDCP configuration information, the third PDCP configuration information is for configuring a first PDCP entity, and the first PDCP entity is for receiving the data of the first MBS.

In a possible design, the fifth configuration information includes second PDCP configuration information, the second PDCP configuration information is for configuring a third PDCP entity, and the third PDCP entity is for receiving the data of the first MBS.

According to an eleventh aspect, which is not covered by the claims, an example of this application provides a communication apparatus. The communication apparatus includes a processor, configured to implement the method performed by the network device in the fifth aspect. The communication apparatus may further include a memory, configured to store program instructions and data. The memory is coupled to the processor. The processor may invoke and execute the program instructions stored in the memory, to implement any method performed by the network device according to the fifth aspect. The communication apparatus may further include a transceiver, where the transceiver is used by the communication apparatus to communicate with another device. For example, the another device is a second user equipment.

In a possible design, the communication apparatus includes a transceiver, configured to: receive first information from a first user equipment by using a second user equipment, where the first information includes an identifier of a first MBS, and the first MBS is an MBS that the first user equipment is interested in; and send fifth configuration information to the first user equipment by using the second user equipment, where the fifth configuration information is used by the first user equipment to receive data of the first MBS.

In a possible design, the communication apparatus includes a transceiver, configured to send sixth configuration information to the second user equipment, where the sixth configuration information is used by the second user equipment to receive the data of the first MBS.

In a possible design, the sixth configuration information includes one or more of the following: an identifier of the first MBS, information about a second time-frequency resource, or information about a second multimedia broadcast multicast service point to multipoint radio bearer MRB, where the second time-frequency resource is for carrying the first MBS, the second MRB is for transmitting the data of the first MBS, the information about the second MRB includes third PDCP configuration information, the third PDCP configuration information is for configuring a first PDCP entity, and the first PDCP entity is for receiving the data of the first MBS.

In a possible design, the fifth configuration information includes second PDCP configuration information, the second PDCP configuration information is for configuring a third PDCP entity, and the third PDCP entity is for receiving the data of the first MBS.

According to a twelfth aspect, which is not covered by the claims, an example of this application provides a communication apparatus. The communication apparatus includes a processor, configured to implement the method performed by the first user equipment in the foregoing sixth aspect. The communication apparatus may further include a memory, configured to store program instructions and data. The memory is coupled to the processor. The processor may invoke and execute the program instructions stored in the memory, to implement any method performed by the first user equipment according to the sixth aspect. The communication apparatus may further include a transceiver, where the transceiver is used by the communication apparatus to communicate with another device. For example, the another device is a second user equipment.

In a possible design, the communication apparatus includes a transceiver, configured to: send first information to a network device by using a second user equipment, where the first information includes an identifier of a first MBS, and the first MBS is an MB S that the first user equipment is interested in; and receive fifth configuration information from the network device by using the second user equipment, where the fifth configuration information is used by the first user equipment to receive data of the first MBS.

In a possible design, the fifth configuration information includes second PDCP configuration information, the second PDCP configuration information is for configuring a third PDCP entity, and the third PDCP entity is for receiving the data of the first MBS.

According to a thirteenth aspect, which is not covered by the claims, an example of this application provides a communication apparatus. The communication apparatus may be a user equipment, or may be an apparatus in the user equipment. The communication apparatus may include a processing module and a communication module. The modules may perform corresponding functions performed by the second user equipment in any design example of the first aspect or any design example of the fourth aspect.

According to a fourteenth aspect, which is not covered by the claims, an example of this application provides a communication apparatus. The communication apparatus may be a network device, or may be an apparatus in the network device. The communication apparatus may include a processing module and a communication module. The modules may perform corresponding functions performed by the network device in any design example of the second aspect or any design example of the fifth aspect.

According to a fifteenth aspect, which is not covered by the claims, an example of this application provides a communication apparatus. The communication apparatus may be a user equipment, or may be an apparatus in the user equipment. The communication apparatus may include a processing module and a communication module. The modules may perform corresponding functions performed by the first user equipment in any design example of the third aspect or any design example of the sixth aspect.

According to a sixteenth aspect, an embodiment of this application further provides a computer-readable storage medium. The storage medium stores a computer program or instructions. When the computer program or the instructions are executed, the method performed by the second user equipment in any design example of the first aspect or any design example of the fourth aspect may be implemented.

According to a seventeenth aspect, which is not covered by the claims, an exampleof this application further provides a computer-readable storage medium. The storage medium stores a computer program or instructions. When the computer program or the instructions are executed, the method performed by the network device in any design example of the second aspect or any design example of the fifth aspect may be implemented.

According to an eighteenth aspect, which is not covered by the claims, an example of this application further provides a computer-readable storage medium. The storage medium stores a computer program or instructions. When the computer program or the instructions are executed, the method performed by the first user equipment in any design example of the third aspect or any design example of the sixth aspect may be implemented.

According to a nineteenth aspect, which is not covered by the claims, an example of this application further provides a computer program product, including instructions. When the computer program product runs on a computer, the computer is enabled to perform the method performed by the second user equipment in any design example in the first aspect or any design example in the fourth aspect.

According to a twentieth aspect, which is not covered by the claims, an example of this application further provides a computer program product, including instructions. When the computer program product runs on a computer, the computer is enabled to perform the method performed by the network device in any design example in the second aspect or any design example in the fifth aspect.

According to a twenty-first aspect, which is not covered by the claims, an example of this application further provides a computer program product, including instructions. When the computer program product runs on a computer, the computer is enabled to perform the method performed by the first user equipment in any design example in the third aspect or any design example in the sixth aspect.

According to a twenty-second aspect, which is not covered by the claims, an example of this application provides a chip system. The chip system includes a processor, and may further include a memory, configured to implement the method performed by the second user equipment in any design example of the first aspect or any design example of the fourth aspect. The chip system may include a chip, or may include a chip and another discrete component.

According to a twenty-third aspect, which is not covered bv the claim, an example of this application provides a chip system. The chip system includes a processor, and may further include a memory, to implement the method performed by the network device in any design example of the second aspect or any design example of the fifth aspect. The chip system may include a chip, or may include a chip and another discrete component.

According to a twenty-fourth aspect, an embodiment of this application provides a chip system. The chip system includes a processor, and may further include a memory, configured to implement the method performed by the first user equipment in any design example of the third aspect or any design example of the sixth aspect. The chip system may include a chip, or may include a chip and another discrete component.

According to a twenty-fifth aspect, which is not covered by the claims, an example of this application further provides a communication system. The communication system includes the communication apparatus in any design example of the seventh aspect, and/or the communication apparatus in any design example of the eighth aspect, and/or the communication apparatus in any design example of the ninth aspect.

According to a twenty-sixth aspect, which is not covered by the claims, an example of this application further provides a communication system. The communication system includes the communication apparatus in any design example of the tenth aspect, and/or the communication apparatus in any design example of the eleventh aspect, and/or the communication apparatus in any design example of the twelfth aspect.

For beneficial effects of the seventh aspect to the twenty-sixth aspect and the implementations thereof, refer to descriptions of beneficial effects of the first aspect or the fourth aspect and the implementations thereof.

### BRIEF DESCRIPTION OF DRAWINGS

FIG. 1 is a schematic structural diagram of a communication system to which an embodiment of this application is applicable;
FIG. 2A is a schematic diagram of a control plane protocol stack in a UE-to-Network relay scenario according to an embodiment of this application;
FIG. 2B is a schematic diagram of a user plane protocol stack in a UE-to-Network relay scenario according to an embodiment of this application;
FIG. 3 is a schematic diagram of communication between UE and UE through a PC5 interface according to an embodiment of this application;
FIG. 4 is a schematic flowchart of receiving, by a user equipment, data of an MBS that the user equipment is interested in according to an example of this application;
FIG. 5 is a schematic flowchart of a communication method according to an embodiment of this application;
FIG. 6 is another schematic flowchart of a communication method according to an embodiment of this application;
FIG. 7 is a schematic diagram of an MRB in an LTE system according to an embodiment of this application;
FIG. 8A is another schematic diagram of a user plane protocol stack in a UE-to-Network relay scenario according to an embodiment of this application;
FIG. 8B is another schematic diagram of a user plane protocol stack in a UE-to-Network relay scenario according to an embodiment of this application;
FIG. 8C is another schematic diagram of a user plane protocol stack in a UE-to-Network relay scenario according to an embodiment of this application;
FIG. 8D is another schematic diagram of a user plane protocol stack in a UE-to-Network relay scenario according to an embodiment of this application;
FIG. 9 is a schematic flowchart of a data forwarding method according to an embodiment of this application;
FIG. 10 is another schematic flowchart of a communication method according to an embodiment of this application;
FIG. 11 is another schematic flowchart of a communication method according to an embodiment of this application;
FIG. 12 is another schematic flowchart of a communication method according to an embodiment of this application;
FIG. 13 is another schematic flowchart of a communication method according to an embodiment of this application;
FIG. 14 is another schematic flowchart of a communication method according to an embodiment of this application;
FIG. 15 is another schematic flowchart of a communication method according to an embodiment of this application;
FIG. 16 is a schematic structural diagram of a communication apparatus according to an embodiment of this application;
FIG. 17 is a schematic structural diagram of another communication apparatus according to an embodiment of this application;
FIG. 18 is a schematic structural diagram of another communication apparatus according to an embodiment of this application;
FIG. 19 is a schematic structural diagram of another communication apparatus according to an embodiment of this application;
FIG. 20 is a schematic block diagram of a communication apparatus according to an embodiment of this application;
FIG. 21 is another schematic block diagram of a communication apparatus according to an embodiment of this application;
FIG. 22 is still another schematic block diagram of a communication apparatus according to an embodiment of this application; and
FIG. 23 is still another schematic block diagram of a communication apparatus according to an embodiment of this application.

### DESCRIPTION OF EMBODIMENTS

For ease of understanding, the following first explains proprietary concepts and nouns in embodiments of this application.
(1) A network device may be an access network device, for example, a radio access network (radio access network, RAN) device, and is a device that provides a wireless communication function for a terminal device. For example, the access network device includes but is not limited to a next generation NodeB (generation NodeB, gNB), an evolved NodeB (evolved NodeB, eNB), a remote radio unit (remote radio unit, RRU), a baseband unit (baseband unit, BBU), a transmission reception point (transmission reception point, TRP), a transmission point (transmission point, TP) in 5th generation (5th generation, 5G), a base station in a future mobile communication system, or an access point in a Wi-Fi system. Alternatively, the access network device may be a radio controller, a central unit (central unit, CU), and/or a distributed unit (distributed unit, DU) in a cloud radio access network (cloud radio access network, CRAN) scenario, or the network device may be a relay station, a vehicle-mounted device, a network device in a future evolved network, or the like.

In embodiments of this application, an apparatus configured to implement functions of the network device may be a network device, or may be an apparatus, for example, a chip system, that can support the network device in implementing the functions. The apparatus may be installed in the network device. In embodiments of this application, the technical solutions provided in embodiments of this application are described by using an example in which the apparatus configured to implement the function of the network device is the network device.

(2) The terminal device may be referred to as a terminal for short, for example, user equipment, and is a device with wireless receiving and sending functions. The terminal device may be deployed on land (for example, may be vehicle-mounted on a vehicle, a high-speed railway, or a motor vehicle), or may be deployed on a water surface (for example, on a ship), or may be deployed in the air (for example, on an airplane, an uncrewed aerial vehicle, a balloon, or a satellite). The terminal device may be a mobile phone, a tablet computer, a computer having a wireless transceiver function, a virtual-reality terminal device, an augmented-reality terminal device, a wireless terminal device in industrial control, a wireless terminal device in self-driving, a wireless terminal device in telemedicine, a wireless terminal device in a smart grid, a wireless terminal device in transportation safety, a wireless terminal device in a smart city, or a wireless terminal device in a smart home. The terminal device may alternatively be a relay terminal device, for example, a mobile phone, a router, or an access device that is deployed by an operator and that is similar to a router. This is not limited in the embodiments of this application.

In embodiments of this application, an apparatus configured to implement a function of the terminal may be a terminal device, or may be an apparatus, for example, a chip system, that can support the terminal device in implementing the function. The apparatus may be installed in the terminal device. In this embodiment of this application, the chip system may include a chip, or may include a chip and another discrete component. In embodiments of this application, the technical solutions provided in embodiments of this application are described by using an example in which the apparatus configured to implement the function of the terminal device is the terminal device.

(3) In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise stated, in embodiments of this application, ordinal numbers such as "first", "second", and "third" are intended to distinguish between a plurality of objects, and not intended to limit a sequence, a time sequence, a priority, or an importance degree of the plurality of the objects.

In addition, the word "example" in embodiments of this application is used to represent giving an example, an illustration, or a description. Any embodiment or design scheme described as an "example" in embodiments of this application should not be explained as being more preferred or having more advantages than another embodiment or design scheme. Exactly, the word "an example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, the following describes a communication system to which embodiments of this application are applicable.

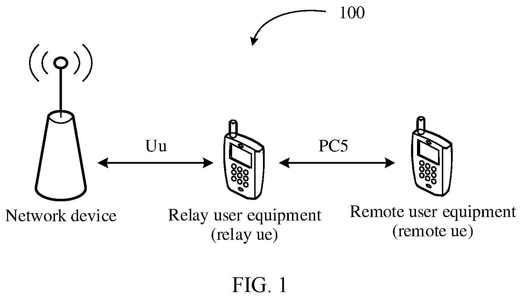

In embodiments of this application, a UE-to-Network relay scenario is used as an example for description. FIG. 1 is a schematic diagram of a communication system to which an embodiment of this application is applicable. As shown in FIG. 1, a communication system 100 includes a network device, at least one relay user equipment, and one remote user equipment. The communication system 100 may include one or more relay user equipments, and one relay user equipment is used as an example in FIG. 1. Similarly, the communication system 100 may include one or more remote user equipments, and one remote user equipment is used as an example in FIG. 1. There is an RRC connection between the network device and the relay user equipment, and the network device and the relay user equipment may communicate with each other through a Uu interface. There is an SL connection between the relay user equipment and the remote user equipment, and the relay user equipment and the remote user equipment may communicate with each other through a PC5 interface. The remote user equipment may access a network by using the relay user equipment, to obtain a service from the network. Downlink transmission is used as an example. The network device may send, to the relay user equipment, data to be sent to the remote user equipment, and the relay user equipment forwards the data to the remote user equipment.

From a perspective of a user plane protocol stack, a relay process may be implemented by using two protocol architectures: a layer 3 (layer 3, L3) relay and an L2 relay. The following describes embodiments of this application by using an L2 relay architecture as an example.

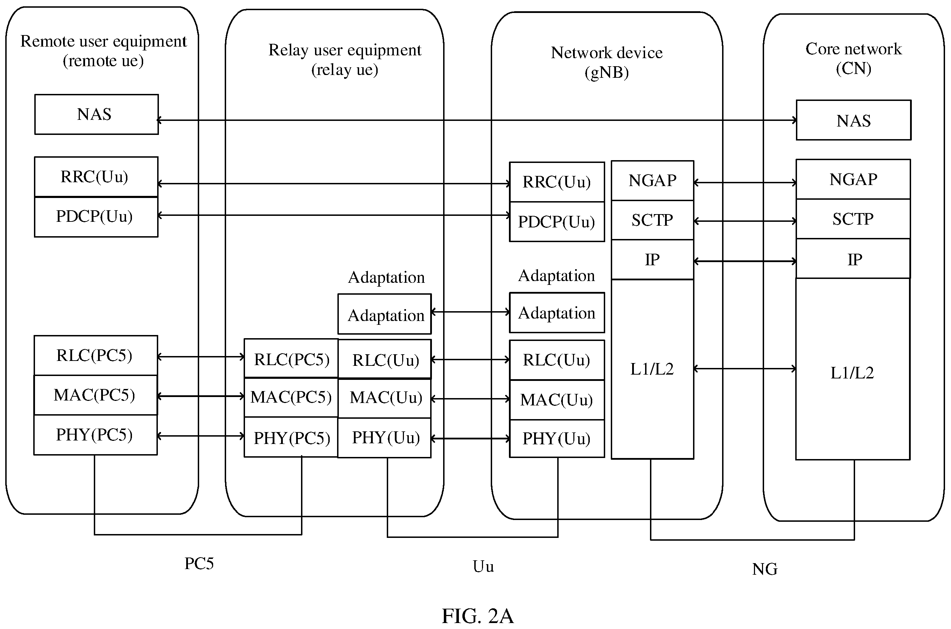

In the L2 relay architecture, a control plane protocol stack between the remote user equipment and the network device is shown in FIG. 2A. FIG. 2A is illustrated by using a new radio (new radio, NR) protocol stack as an example.

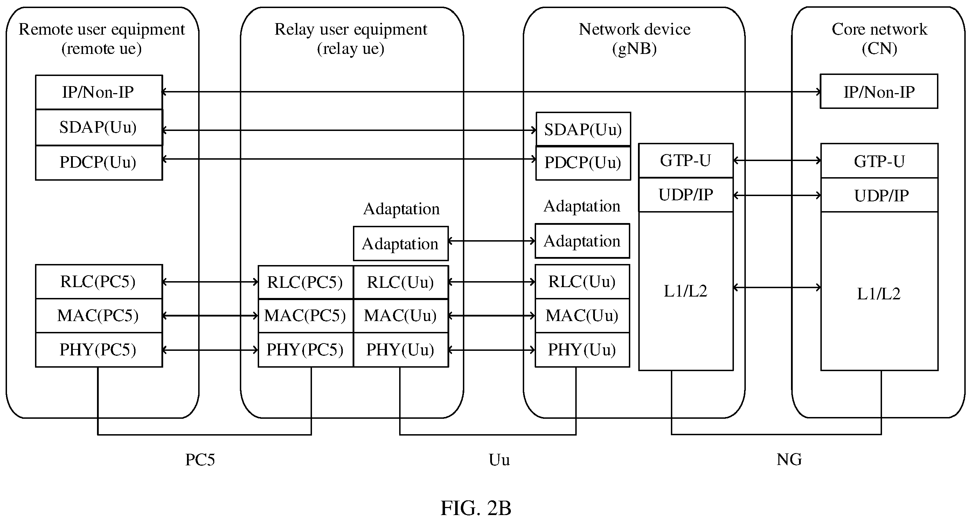

In the L2 relay architecture, user data may be relayed below a packet data convergence protocol (packet data convergence protocol, PDCP) layer. In this case, a schematic diagram of a user plane protocol stack is shown in FIG. 2B. FIG. 2B shows an L2 architecture designed based on an NR system. The user plane protocol stack includes a service data adaptation protocol (service data adaptation protocol, SDAP) protocol layer. The SDAP layer is located above the PDCP layer and below an IP layer.

The following describes some related technical features in embodiments of this application.

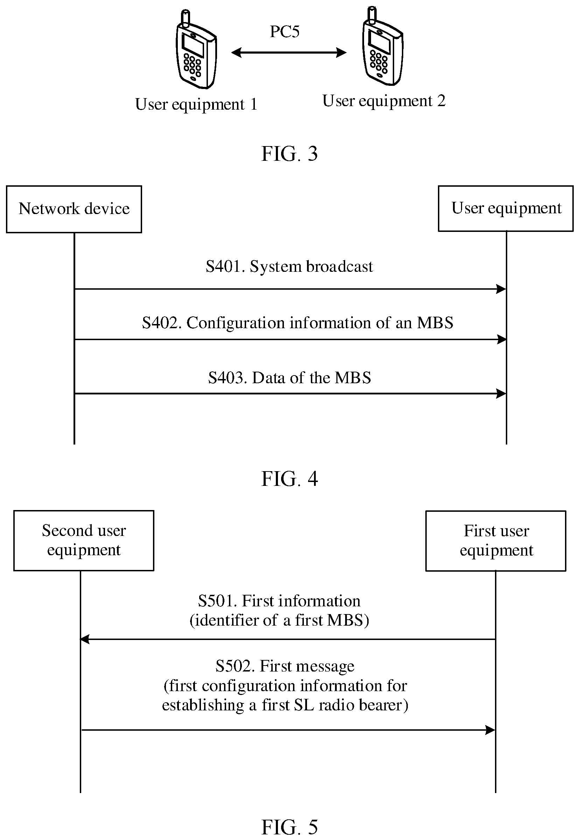

In a wireless communication system, a user equipment 1 and a user equipment 2 may perform data communication over a network, or may directly communicate with each other without using a network device. An interface between the user equipment 1 and the user equipment 2 is referred to as a PC5 interface. The user equipment 1 (or the user equipment 2) may communicate with the network device through a Uu interface. The PC5 interface is shown in FIG. 3. A link between the user equipment 1 and the user equipment 2 is referred to as a sidelink (sidelink, SL). A typical application scenario of sidelink communication is a vehicle-to-everything (vehicle-to-everything, V2X) system. In the V2X system, each vehicle may be considered as a user equipment, and user equipments may directly transmit data to each other through a sidelink without using the network device. Therefore, a communication delay can be effectively reduced.

In the sidelink communication, broadcast communication, unicast communication, or multicast communication is supported. The broadcast communication in the sidelink communication is similar to that the network device broadcasts system information to the user equipment. To be specific, the user equipment at a transmit end directly broadcasts service data to the outside without encrypting the service data. Any other user equipment within a valid receiving range may receive the service data if the user equipment is interested in the service data. The unicast communication in the sidelink communication is similar to data communication performed after an RRC connection is established between the user equipment and the network device, that is, a unicast connection needs to be first established between two user equipments. After the unicast connection is established, the two user equipments may perform data communication based on a negotiated communication identifier. In a communication process, transmitted data may be encrypted or may not be encrypted. Compared with the broadcast communication, the unicast communication can be performed only between two user equipments that have established a unicast connection. The multicast communication in the sidelink communication means that a user equipment in a communication group sends multicast service data, and all other user equipments in the communication group can receive the multicast service data.

As described above, the network device may broadcast configuration information of an MBS and data of the MBS within a coverage area of the network device. A user equipment within the coverage area of the network device may receive data of an MBS that the user equipment is interested in. FIG. 4 is a schematic flowchart in which a user equipment receives data of an MBS that the user equipment is interested in.

S401: A network device broadcasts a system broadcast, and a user equipment listens to system broadcast.

For example, the user equipment listens to the system broadcast of a serving cell of the user equipment. The system broadcast may include indication information, and the indication information may be used for obtaining configuration information of an MBS. The configuration information of the MBS is for receiving data of the MBS.

S402: The network device broadcasts the configuration information of the MBS, and the user equipment receives the configuration information of the MBS.

The user equipment may receive, based on the detected system broadcast, the configuration information of the MBS broadcast by the network device. For example, the configuration information of the MBS may include related information of the data of the MBS that is being transmitted in a current cell. The related information may include service indication information, for example, a temporary mobile group identity (temporary mobile group identity, TMGI) or a session identity.

The MBS that the user equipment is interested in may be an MBS that the user equipment wants to obtain, an MBS supported by the user equipment, an MBS required by the user equipment, or the like. This is not limited in this embodiment of this application.

If the MBS that is being transmitted in the current cell includes the MBS that the user equipment is interested in, step S403 is performed. Alternatively, if the MBS that is being transmitted in the current cell does not include the MBS that the user equipment is interested in, the received configuration information of the MBS is discarded. Discarding may refer to an operation such as deletion or ignoring.

S403: The network device broadcasts the data of the MBS, and the user equipment receives the data of the MBS.

For example, the user equipment may receive, based on the configuration information of the MBS, data of the MBS that the user equipment is interested in.

It should be noted that an execution sequence of the steps shown in FIG. 4 is merely an example. This is not limited in this embodiment of this application. For example, the network device may first broadcast a system broadcast and then broadcast the configuration information of the MBS, or may simultaneously broadcast the system broadcast and the configuration information of the MBS, or may broadcast only the configuration information of the MBS. For another example, the network device may broadcast only a system broadcast, and the system broadcast may include the configuration information of the MBS.

In the procedure shown in FIG. 4, the user equipment may directly receive the data of the MBS broadcast by the network device. When the user equipment is located outside a coverage area of the network device, or is located at a coverage edge of the network device (for example, in a UE-to-Network relay scenario), the user equipment needs to establish a control plane connection and a user plane connection to the network device by using a relay user equipment, to implement communication between the user equipment and the network device. In this case, the user equipment may be referred to as a remote user equipment. Signaling and/or data between the remote user equipment and the network device are/is transmitted in a unicast manner. To be specific, the signaling and/or the data sent by the network device to the remote user equipment arrive/arrives at the relay user equipment through an RRC radio bearer, and then the relay user equipment forwards the signaling and/or the data to the remote user equipment through the SL radio bearer. During this period, the relay user equipment serves as an intermediate node between the network device and the remote user equipment, and does not know what signaling and/or data are/is exchanged between the remote user equipment and the network device, but only passively forwards the signaling and/or the data. The network device sends the data of the MBS in a broadcast or multicast manner. When the remote user equipment is located outside the coverage area or at the coverage edge, no unicast connection is established between the remote user equipment and the network device for the MBS. The relay user equipment does not actively forward the data of the MBS broadcast by the network device to the remote user equipment, and the remote user equipment cannot receive the data of the MBS broadcast by the network device.

In view of this, embodiments of this application provide a communication method, apparatus, and system, so that the remote user equipment can receive, by using the relay user equipment, the data of the MBS broadcast by the network device. This can resolve a problem that, for example, in a UE-to-Network relay scenario, the remote user equipment cannot receive the data of the MBS because no unicast connection is established between the remote user equipment and the network device for the MBS and the relay user equipment does not forward, to the remote user equipment, the data of the MBS broadcast by the network device.

FIG. 5 is a schematic flowchart of a communication method according to an embodiment of this application. The method may be applied to the communication system 100 shown in FIG. 1. A network device in this embodiment of this application may be the network device shown in FIG. 1, a first user equipment may be the remote user equipment shown in FIG. 1, and a second user equipment may be the relay user equipment shown in FIG. 1. It should be understood that, in this embodiment of this application, a step performed by the network device may also be specifically performed by a module or a component of the network device, for example, may be performed by a chip or a chip system in the network device; a step performed by the user equipment may also be specifically performed by a module or a component of the user equipment, for example, may be performed by a chip or a chip system in the user equipment. As shown in FIG. 5, the method may include the following steps.

S501: The first user equipment sends first information to the second user equipment, and correspondingly the second user equipment receives the first information from the first user equipment.

For example, the first information may include an identifier of a first MBS, such as a TMGI and/or a session identifier. The first MBS is an MBS that the first user equipment is interested in. The MBS that the first user equipment is interested in may be an MBS that the first MBS wants to obtain, an MBS supported by the first user equipment, an MBS required by the first user equipment, or the like. This is not limited in this embodiment of this application.

For example, after the first user equipment establishes an SL unicast connection to the second user equipment, the first user equipment may report, to the second user equipment by using dedicated signaling (for example, SL RRC signaling or SL MAC signaling), an identifier (that is, the first information) of an MBS that the first user equipment is interested in, and the first user equipment receives the first information, so that the second user equipment listens to and receives, based on the first information, the data that is of the MBS interested in by the first user equipment and that is broadcast by the network device. Alternatively, a user performs an operation of obtaining data of the first MBS on the first user equipment, to trigger the first user equipment to send the first information to the second user equipment, and the second user equipment receives the first information, so that the second user equipment listens to and receives, based on the first information, the data that is of the first MBS interested in by the first user equipment and that is broadcast by the network device. Alternatively, before the first user equipment establishes an SL unicast connection to the second user equipment, the first user equipment may broadcast, in a discovery process, the identifier of the MBS that the first user equipment is interested in to the outside, so as to discover at least one second user equipment that supports the first MBS, so that the first user equipment may determine (and/or select) one second user equipment from the at least one second user equipment as the second user equipment that establishes the SL unicast connection to the first user equipment.

For a specific implementation process of step S501, refer to content shown in step S603 in Example 1 below, content shown in step S1005 in Example 2, content shown in step S1102 in Example 3, content shown in step S1206 in Example 4, or content shown in step S1303 in Example 5.

S502: The second user equipment sends a first message to the first user equipment, and correspondingly the first user equipment receives the first message.

For example, the first message may include first configuration information, the first configuration information is for configuring a first SL radio bearer between the second user equipment and the first user equipment, and the first SL radio bearer is for transmitting the data of the first MBS. For example, the first configuration information may include one or more of the following information: logical channel configuration information, configuration information of a first radio link control (radio link control, RLC) entity, configuration information of a first media access control (media access control, MAC) entity, or configuration information of a first physical (Physical, PHY) layer. The logical channel configuration information includes at least a logical channel identifier, and the logical channel identifier identifies a logical channel. The configuration information of the first RLC entity is for configuring a first RLC entity, and the first RLC entity is for receiving the data of the first MBS. The configuration information of the first MAC layer is for configuring a first MAC entity, and the first MAC entity is for receiving the data of the first MBS. The configuration information of the first PHY layer is for configuring a first PHY layer, and the first PHY layer is for receiving the data of the first MBS.

In an example, after receiving the first information from the first user equipment, the second user equipment may determine that a first cell supports the first MBS or does not support the first MBS. For example, if a second MBS includes the first MBS, the second user equipment determines that the first cell supports the first MBS; or if a second MBS does not include the first MBS, the second user equipment determines that the first cell does not support the first MBS. When determining that the first cell supports the first MBS, the second user equipment may send the first message to the first user equipment, so that the first user equipment establishes the first SL radio bearer, and receives, through the first SL radio bearer, the data of the first MBS forwarded by the second user equipment. In this case, for a specific implementation process of step S502, refer to content shown in step S607 in Example 1 below or content shown in step S1106 in Example 3 below. The second MBS is an MBS supported by the first cell or an MBS supported by the second user equipment, and the first cell is a serving cell of the second user equipment. The following uses an example in which the second MBS is an MBS supported by the first cell for description. Optionally, when determining that the first cell does not support the first MBS, the second user equipment may report, to the network device, the identifier (that is, the first information) of the MBS that the first user equipment is interested in, and the network device receives the first information, so that the network device may initiate the first MBS based on the first information, and configure, for the first user equipment, third configuration information for establishing the first SL radio bearer. After receiving the third configuration information from the network device, the second user equipment may send the first message to the first user equipment based on the third configuration information, so that the first user equipment establishes the first SL radio bearer, and receives, through the first SL radio bearer, the data of the first MBS forwarded by the second user equipment. In this case, for a specific implementation process of step S502, refer to content shown in step S1308 in Example 5 below.

That the network device initiates the first MBS based on the first information may be understood as: The network device broadcasts the data of the first MBS to the outside based on the first information. In other words, the first cell (or the second user equipment) originally does not support the first MBS, but after receiving the first information reported by the second user equipment, the network device starts to broadcast the data of the first MBS to the outside based on the first information, so that the first cell (or the second user equipment) starts to support the first MBS. The third configuration information is for establishing the first SL radio bearer. Optionally, the third configuration information may be the first configuration information.

In another example, after receiving the first information from the first user equipment, the second user equipment may directly send the first message to the first user equipment, so that the first user equipment establishes the first SL radio bearer, and receives, through the first SL radio bearer, the data of the first MBS forwarded by the second user equipment. In this case, for a specific implementation process of step S502, refer to content shown in step S1006 in Example 2 below or content shown in step S1207 in Example 4 below.

In another example, regardless of whether the first cell supports the first MBS or does not support the first MBS, after receiving the first information from the first user equipment, the second user equipment may report, to the network device through a Uu interface, an identifier of an MBS that the first user equipment is interested in, so that the network device configures, for the first user equipment, the third configuration information for establishing the first SL radio bearer. After receiving the third configuration information from the network device, the second user equipment may send the first message to the first user equipment based on the third configuration information, so that the first user equipment establishes the first SL radio bearer, and receives, through the first SL radio bearer, the data of the first MBS forwarded by the second user equipment. In this case, for a specific implementation process of step S502, refer to content shown in step S1308 in Example 5 below.

The following describes the communication method shown in FIG. 5 in detail with reference to Example 1 to Example 5.

### Example 1

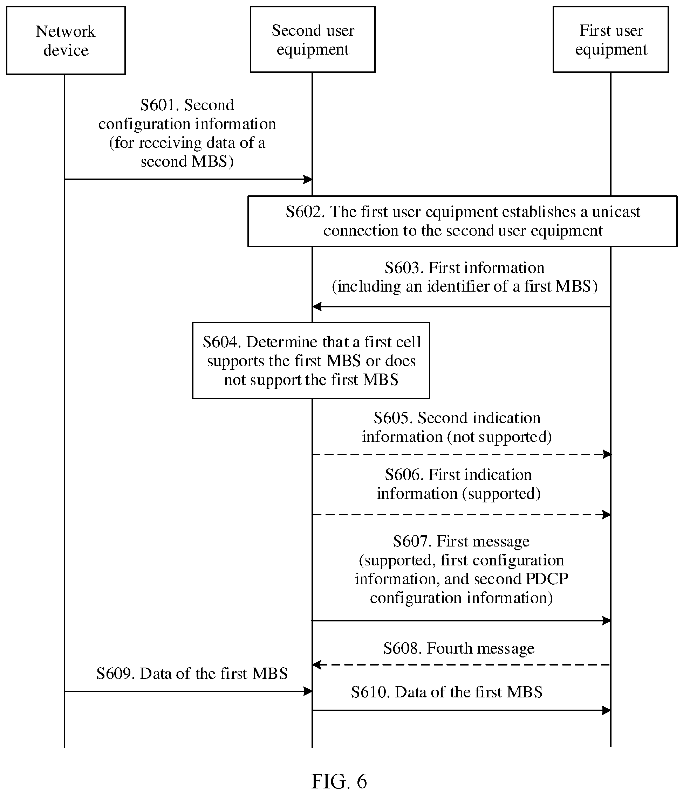

FIG. 6 is a schematic flowchart of a communication method according to an embodiment of this application. Dashed lines in FIG. 6 indicate that the step is an optional step. The method may be performed by a user equipment and a network device, or may be performed by a chip in the user equipment and a chip in the network device. A network device in FIG. 6 may be the network device in FIG. 1, a first user equipment may be the remote user equipment in FIG. 1, and a second user equipment may be the relay user equipment in FIG. 1. In the method, the second user equipment determines, based on first information reported by the first user equipment, that a first cell supports a first MBS or does not support the first MBS. When the first cell supports the first MBS, the second user equipment may configure, for the first user equipment, first configuration information for receiving data of the first MBS, so that the first user equipment can receive, based on the first configuration information, the data of the first MBS broadcast by the network device. The method shown in FIG. 6 may include the following steps.

S601: The network device broadcasts second configuration information, and the second user equipment receives the second configuration information.

For example, the second configuration information is for receiving data of a second MBS, the second MBS is the first cell or an MBS supported by the second user equipment, and the first cell is a serving cell of the second user equipment. For example, the network device may periodically or aperiodically broadcast the second configuration information within a coverage area of the network device. The second user equipment located in the coverage area of the network device may receive the second configuration information. When the second user equipment is interested in the second MBS broadcast by the network device, the second user equipment may receive the data of the second MBS based on the second configuration information.

For example, the second configuration information may include one or more of the following: an identifier of the second MBS, a data identifier of the second MBS (for example, a group radio network temporary identifier (group radio network temporary identity, G-RNTI)), information about a first time-frequency resource, or information about a first MRB. The first time-frequency resource is for carrying the second MBS, the first MRB is for transmitting the data of the second MBS, and the data identifier of the second MBS may be understood as an identifier used by the second user equipment to receive the data of the second MBS. Further, the information about the first MRB may include first packet data convergence protocol (packet data convergence protocol, PDCP) configuration information and/or first logical channel configuration information. The first PDCP configuration information is for configuring a second PDCP entity, the second PDCP entity may be used by the second user equipment to receive the data of the second MBS, the configuration information of the first logical channel is for configuring a first logical channel, and the first logical channel may be used for transmitting the data of the second MBS. For example, when the data of the second MBS is processed by a PDCP entity, correspondingly, the second user equipment needs to establish a peer PDCP entity to successfully receive the data of the second MBS. In this case, the information about the first MRB includes the first PDCP configuration information.

S602: The first user equipment establishes a unicast connection to the second user equipment.

For example, the first user equipment may select a relay user equipment (which may be denoted as the second user equipment), and establish an SL unicast connection to the second user equipment. For example, the first user equipment may measure an SL reference signal between the first user equipment and at least one relay user equipment, and determine, from the at least one relay user equipment based on measurement results, one relay user equipment with best communication quality as the relay user equipment to which the unicast connection is established. The best communication quality may be understood as a largest measurement result. For example, the measurement result may be reference signal received power, or may be a received signal strength indicator.

S603: The first user equipment sends the first information to the second user equipment, and the second user equipment receives the first information.

The first information may include an identifier of the first MBS, for example, a TMGI and/or a session identifier. The first MBS is an MBS that the first user equipment is interested in. The MBS that the first user equipment is interested in may be an MBS that the first MBS wants to obtain, an MBS supported by the first user equipment, an MBS required by the first user equipment, or the like. This is not limited in this embodiment of this application.

In an example, after establishing the SL unicast connection to the second user equipment, the first user equipment may report, to the second user equipment by using SL RRC signaling, SL MAC signaling, or the like, an identifier of the MBS that the first user equipment is interested in. The second user equipment receives the identifier of the MBS that the first user equipment is interested in. This enables the second user equipment to listen to the first MBS based on the identifier of the first MBS, receive the data of the first MBS from data of an MBS broadcast by the network device, and forward the data of the first MBS to the first user equipment. This resolves a problem that the second user equipment does not actively forward, to the first user equipment, the data of the MBS broadcast by the network device because as an intermediate node between the first user equipment and the network device (for example, in a UE-to-Network relay scenario), the second user equipment does not know what signaling and/or data is transmitted between the first user equipment.

In another example, a user performs an operation of obtaining the data of the first MBS on the first user equipment, to trigger the first user equipment to send the first information to the second user equipment. For example, an application program (application, APP) corresponding to an MBS is installed on the first user equipment, and the user may trigger the first user equipment to send the first information to the second user equipment by performing an operation (such as a voice operation and/or a touchscreen operation) on the APP corresponding to the MBS in the first user equipment. After receiving the first information, the second user equipment may listen to the first MBS based on the identifier of the first MBS, receive the data of the first MBS from the data of the MBS broadcast by the network device, and forward the data of the first MBS to the first user equipment. This resolves a problem that the second user equipment does not forward the data that is of the first MBS and that needs to be obtained by the first user equipment to the first user equipment, when the first user equipment needs to obtain the data of the first MBS, but as an intermediate forwarding node between the first user equipment and the network device, the second user equipment does not know what signaling and/or data is transmitted between the first user equipment.

Optionally, before step S603, the first user equipment may establish a connection to the network device by using the second user equipment, or the first user equipment does not establish a connection to the network device by using the second user equipment. This is not limited in this embodiment of this application.

S604: The second user equipment determines that the first cell supports the first MBS or does not support the first MBS.

For example, the second user equipment may determine, based on the second configuration information, that the first cell supports the first MBS or does not support the first MBS. For example, if the second MBS includes the first MBS, the second user equipment may determine that the first cell supports the first MBS. Alternatively, if the second MBS does not include the first MBS, the second user equipment may determine that the first cell does not support the first MBS.

Optionally, if the second user equipment determines that the first cell does not support the first MBS, the second user equipment performs content shown in step S605. Alternatively, if the second user equipment determines that the first cell supports the first MBS, the second user equipment performs content shown in step S606 to step S610. Alternatively, if the second user equipment determines that the first cell supports the first MBS, the second user equipment performs content shown in step S607 to step S610.

S605: The second user equipment sends second indication information to the first user equipment, and the first user equipment receives the second indication information.

For example, the second indication information may indicate that the first cell does not support the first MBS. For example, when the first cell does not support the first MBS, the second user equipment may send the second indication information to the first user equipment, so that the first user equipment determines that the first cell does not support the first MBS. Further, after determining that the first cell does not support the first MBS, the first user equipment may choose to establish an SL unicast connection to another relay user equipment, and perform the content shown in step S603, to obtain the data of the MBS that the first user equipment is interested in.

S606: The second user equipment sends first indication information to the first user equipment, and the first user equipment receives the first indication information.

For example, the first indication information may indicate that the first cell supports the first MBS. For example, when the first cell supports the first MBS, the second user equipment may send the first indication information to the first user equipment, so that the first user equipment determines that the first cell supports the first MBS. Further, after receiving the first indication information, the first user equipment may perform the content shown in step S607 to step S610.

In an example, the first indication information may further indicate the first MBS supported by the first cell and/or the first MBS not supported by the first cell. For example, when there are a plurality of first MBSs, and the second MBS includes a part of the plurality of first MBSs, the second user equipment may send the first indication information to the first user equipment, to indicate a first MBS supported by the first cell and/or the first MBS not supported by the first cell. Optionally, after receiving the first indication information, the first user equipment may send fourth indication information to the second user equipment. The fourth indication information may indicate the first user equipment to obtain data of the part of MBSs (that is, perform the content shown in step S607 to step S610), or indicate the first user equipment to abandon obtaining data of the part of MBSs. Further, when the first user equipment abandons obtaining the data of the part of MBSs, the first user equipment may choose to establish an SL unicast connection to another relay user equipment, and perform the content shown in step S603, to obtain the data of the MBS that the first user equipment is interested in.

S607: The second user equipment sends the first message to the first user equipment, and the first user equipment receives the first message.

The first message may include first configuration information. The first configuration information may be for configuring the first SL radio bearer between the second user equipment and the first user equipment. The first SL radio bearer may be for transmitting data of the first MBS.

For example, after determining that the first cell supports the first MBS, the second user equipment may configure, for the first user equipment, the first configuration information for establishing the first SL radio bearer. For example, the second user equipment may configure, for the first user equipment based on the second configuration information, the first configuration information for establishing the first SL radio bearer. After configuring the first configuration information, the second user equipment may send the first message to the first user equipment by using SL RRC signaling, SL MAC signaling, or the like, and the first user equipment receives the first message, so that the first user equipment establishes the first SL radio bearer for the first MBS, and receives the data of the first MBS through the first SL radio bearer. This resolves a problem that the first user equipment cannot receive the data of the MBS broadcast by the network device in a UE-to-Network relay scenario. Optionally, the first message may be an SL RRC reconfiguration message.

In an example, the first message may further include second PDCP configuration information. The second PDCP configuration information is for configuring a third PDCP entity. The third PDCP entity may be used by the first user equipment to receive the data of the first MBS.

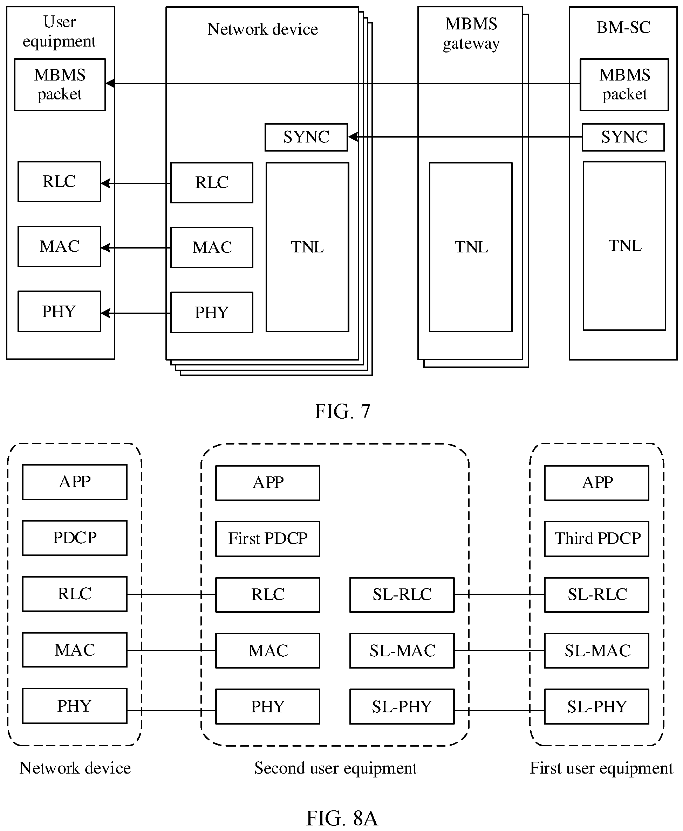

In an LTE system, an MRB does not include a PDCP entity, as shown in FIG. 7. As shown in FIG. 7, a bearer established between a user equipment and a network device is an MRB, and the MRB does not include a PDCP entity, and involves only an RLC entity, a MAC entity, and a PHY layer. In an NR system, an MRB may include a PDCP entity, and the PDCP entity may be configured to transmit data of an MBS. In this case, there are two cases for the second user equipment. Case 1: The second user equipment is not interested in an MBS broadcast by the network device, and the second user equipment may not establish a PDCP entity when establishing an MRB based on the network device. Case 2: The second user equipment is interested in an MBS broadcast by the network device, and the second user equipment establishes a complete MRB, that is, needs to establish a PDCP entity.

As described above, if the data of the first MBS sent by the network device is processed by the PDCP entity, correspondingly, when the data of the first MBS is received, the second user equipment and the first user equipment also need to have a peer PDCP entity for processing. To be specific, the second user equipment establishes the first PDCP entity, and the first user equipment establishes the third PDCP entity. In this case, a user plane protocol stack for transmitting an MBS is shown in FIG. 8A. For example, the second user equipment may establish the first PDCP entity for receiving the data of the first MBS, so as to ensure that the second user equipment can successfully receive the data of the first MBS, and/or successfully forward the data of the first MBS to the first user equipment. Specifically, the second user equipment may obtain the third PDCP configuration information from the second configuration information, or obtain, by using dedicated signaling (for example, RRC signaling or MAC signaling), third PDCP configuration information configured by the network device for the second user equipment. The second user equipment establishes the first PDCP entity based on the third PDCP configuration information, so as to ensure that the second user equipment successfully receives the data of the first MBS, and/or successfully forwards the data of the first MBS to the first user equipment. The third PDCP configuration information is for configuring the first PDCP entity, and the first PDCP entity is used by the second user equipment to receive the data of the first MBS. For example, the first user equipment may establish a third PDCP entity for receiving the data of the first MBS, to ensure that the first user equipment can successfully receive the data of the first MBS. Specifically, the second user equipment may determine the second PDCP configuration information based on the third PDCP configuration information, and send the second PDCP configuration information to the first user equipment. After receiving the second PDCP configuration information, the first user equipment may establish the third PDCP entity based on the second PDCP configuration information, so as to ensure that the first user equipment successfully receives the data of the first MBS from the network device. Optionally, the second PDCP configuration information may be the third PDCP configuration information.

It should be noted that the user plane protocol stack shown in FIG. 8A is only an example, and it is not excluded that another protocol layer entity may be involved. For example, an SDAP entity may further exist between the first PDCP entity and an APP layer, and the SDAP entity is configured to perform mapping from a quality of service (quality of service, QoS) flow to a bearer. For another example, in an MRB protocol stack of the second user equipment, an adaptation layer entity may exist between the first PDCP entity and an RLC entity, and the adaptation layer entity may be for distinguishing between different remote user equipments.

In another example, the first message may indicate a correspondence between the first SL radio bearer and the first MBS. For example, when there are a plurality of first MBSs, the first message may indicate a correspondence between the first SL radio bearer and each of the plurality of first MBSs, so that the first user equipment may successfully receive, based on the correspondence between the first SL radio bearer and each of the plurality of first MBSs, data of the plurality of first MBSs forwarded by the second user equipment. For example, the plurality of first MBSs include a first MBS_1 and a first MBS_2, the first SL radio bearer includes a first SL radio bearer 1 and a first SL radio bearer 2, the first message may indicate that the first SL radio bearer 1 is for transmitting data of the first MBS_1 and the first SL radio bearer 2 is for transmitting data of the first MBS_2, and the first user equipment may separately receive, through the first SL radio bearer 1 and the first SL radio bearer 2 based on the content indicated by the first message, the data of the first MBS_1 and the data of the first MBS_2 that are forwarded by the second user equipment.

Optionally, after the second user equipment sends the first message to the first user equipment, the second user equipment may further perform the content shown in step S608, or certainly may not perform the content shown in step S608.

S608: The first user equipment sends a fourth message to the second user equipment, and the second user equipment receives the fourth message.

For example, the fourth message may indicate the first user equipment to complete establishment of the first SL radio bearer. For example, the fourth message may be an SL RRC reconfiguration complete message. For example, after receiving the first message, the first user equipment may establish the first SL radio bearer based on the first message. After the first SL radio bearer is established, the first user equipment may send a fourth message to the second user equipment, to indicate that configuration is completed.

S609 and S610: The network device broadcasts the data of the first MBS, and the second user equipment receives the data of the first MBS. The second user equipment sends the data of the first MBS to the first user equipment, and the first user equipment receives the data of the first MBS.

For example, the network device periodically or aperiodically broadcasts the data of the first MBS within a coverage area of the network device. After listening to the first MBS, the second user equipment may receive, through a Uu interface, the data of the first MBS broadcast by the network device. After receiving the data of the first MBS, the second user equipment may send the data of the first MBS to the first user equipment through a PC5 interface. The first user equipment receives the data of the first MBS through the PC5 interface.

In the foregoing embodiment of this application, the first user equipment reports, to the second user equipment, the identifier of the MBS that the first user equipment is interested in, so that the second user equipment listens to and receives the data of the first MBS broadcast by the network device. After receiving the first information from the first user equipment, the second user equipment may determine, with reference to the second configuration information sent by the network device, that the first cell supports the first MBS or does not support the first MBS. After determining that the first cell supports the first MBS, the second user equipment sends the first configuration information to the first user equipment. The first configuration information is for configuring the first SL radio bearer between the first user equipment and the second user equipment. The first SL radio bearer may be for transmitting the data of the first MBS, so that the first user equipment may establish, based on the first configuration information, the first SL radio bearer for transmitting the data of the first MBS. That is, after receiving the data of the first MBS broadcast by the network device, the second user equipment may send the data of the first MBS to the first user equipment through the first SL radio bearer, so that the first user equipment can receive the data of the MBS from the network device.

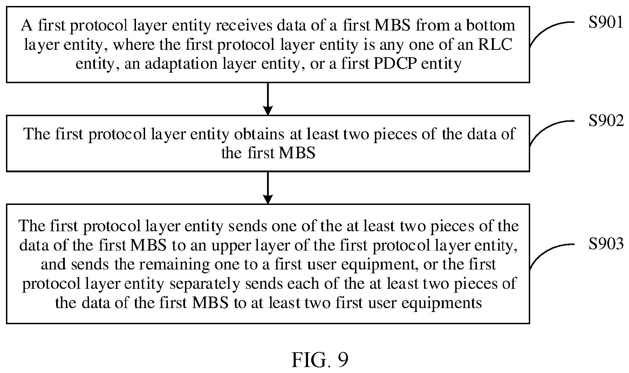

The content shown in step S609 and step S610 is described in detail below with reference to FIG. 9. FIG. 9 is a schematic flowchart of a data forwarding method according to an embodiment of this application. The method may be performed by a user equipment, or may be performed by a chip in the user equipment. A first user equipment in FIG. 9 may be the remote user equipment in FIG. 1, and a second user equipment may be the relay user equipment in FIG. 1. The method shown in FIG. 9 may include the following steps.

S901: A first protocol layer entity receives data of a first MBS from a bottom layer entity.

As shown in FIG. 8A, a complete MRB protocol stack is established between the second user equipment and a network device, a first SL radio bearer is established between the second user equipment and the first user equipment, and the first SL radio bearer relates to at least one of an SL RLC entity, an SL MAC entity, or an SL PHY layer. In addition, the first user equipment establishes a third PDCP entity, to receive the data of the first MBS. The second user equipment establishes a first PDCP entity, to receive the data of the first MBS.

For example, the network device broadcasts the data of the first MBS, and the first protocol layer entity in the MRB of the second user equipment may receive the data of the first MBS from the bottom layer entity. The first protocol layer entity may be an RLC entity in an MRB of the second user equipment, an adaptation layer entity in an MRB of the second user equipment, a first PDCP entity in an MRB of the second user equipment, or the like. This is not limited in this embodiment of this application. The bottom layer entity may be a MAC entity or a PHY layer.

Optionally, if the second user equipment is also interested in the first MBS, the second user equipment may perform content shown in step S902 and step S903. Alternatively, if a plurality of first user equipments are interested in the first MBS, content shown in step S902 and step S903 may be performed. Alternatively, if only one first user equipment is interested in the first MBS, the first protocol layer entity may send, to the first user equipment by using an SL RLC entity or an adaptation layer entity on the right, the data of the first MBS received from the bottom layer entity, and content shown in step S902 to step S903 does not need to be performed.

S902: The first protocol layer entity obtains at least two pieces of the data of the first MBS.

For example, the first protocol layer entity may obtain the at least two pieces of the data of the first MBS based on the data of the first MBS received from the bottom layer entity, to ensure that both the second user equipment and at least one first user equipment can receive the data of the first MBS, or ensure that each of the plurality of first user equipments can receive the data of the first MBS. For example, when both the second user equipment and the at least one first user equipment are interested in the first MBS, or a plurality of first user equipments are interested in the first MBS, the first protocol layer entity performs a replication operation on the data of the first MBS received from the bottom layer entity, to obtain the at least two pieces of the data of the first MBS. For another example, when both the second user equipment and the at least one first user equipment are interested in the first MBS, or a plurality of first user equipments are interested in the first MBS, the first protocol layer entity copies at least one piece of the data of the first MBS from the data of the first MBS received from the bottom layer entity, to obtain at least two pieces of the data of the first MBS.

S903: The first protocol layer entity sends one of the at least two pieces of the data of the first MBS to an upper layer entity of the first protocol layer entity, and sends the remaining one to the first user equipment. Alternatively, the first protocol layer entity sends each of the at least two pieces of the data of the first MBS to the at least two first user equipments respectively.

For example, if the second user equipment and the at least one first user equipment are interested in the first MBS, the first protocol layer entity may obtain at least two pieces of the data of the first MBS by using the foregoing replication operation. The first protocol layer entity sends one of the two pieces of the data of the first MBS to an upper layer entity of the first protocol layer entity, so that the second user equipment receives the data of the first MBS, and sends the remaining at least one piece of the data to the at least one first user equipment, so that the at least one first user equipment can receive the data of the first MBS. For another example, if at least two first user equipments are interested in the first MBS, the second user equipment and a plurality of first user equipments are interested in the first MBS, and the first protocol layer entity may obtain at least two pieces of the data of the first MBS by using the foregoing replication operation. The second user equipment sends each of the at least two pieces of the data of the first MBS to the at least one first user equipment, so that each of the at least two first user equipments can receive the data of the first MBS. For example, the second user equipment may send each piece of the data of the first MBS to the at least one first user equipment based on a correspondence between the first MBS and the first user equipment.

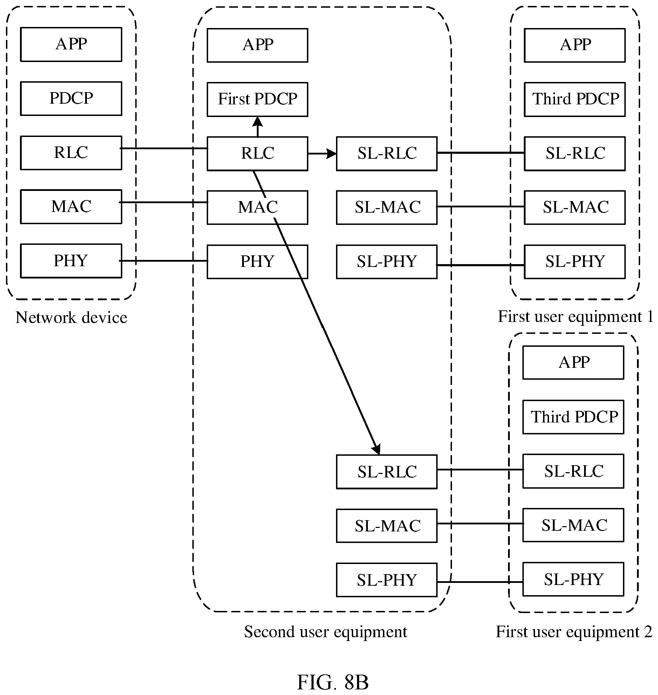

In an example, the first protocol layer entity may be an RLC entity. Correspondingly, an upper layer entity of the first protocol layer entity may be any one of a first PDCP entity, an adaptation layer entity, an SDAP entity, or an APP layer. For example, when both the second user equipment and the at least one first user equipment are interested in the first MBS, the RLC entity may parse an RLC protocol data unit (protocol data unit, PDU) received by the MAC entity, obtain an RLC service data unit (service data unit, SDU) through parsing, and perform a duplication operation on the RLC SDU to obtain at least two RLC SDUs. The RLC entity sends one of the at least two RLC SDUs to an upper layer entity of the RLC entity, so that the second user equipment receives the data of the first MBS. Further, the RLC entity sends the remaining RLC SDU to at least one SL RLC entity on the right, so that at least one first user equipment receives the RLC SDU, as shown in FIG. 8B (where FIG. 8B includes two first user equipments).

The upper layer entity of the RLC entity may be an adaptation layer entity. For example, an MRB of the second user equipment includes an adaptation layer entity. Alternatively, the upper layer entity of the RLC entity may be a first PDCP entity. For example, an MRB of the second user equipment includes a first PDCP entity but does not include an adaptation layer entity. Alternatively, the upper layer entity of the RLC entity may be an SDAP entity. For example, an MRB of the second user equipment includes an SDAP entity but does not include a first PDCP entity nor an adaptation layer entity. Alternatively, the upper layer entity of the RLC entity may be an APP layer. For example, an MRB of the second user equipment includes the APP layer but does not include a first PDCP entity, an adaptation layer entity, nor an SDAP entity.

Optionally, the RLC entity may directly send the remaining RLC SDU to at least one SL RLC entity on the right, or may separately send the remaining RLC SDU to the at least one first user equipment by using the adaptation layer entity. This is not limited in this embodiment of this application.

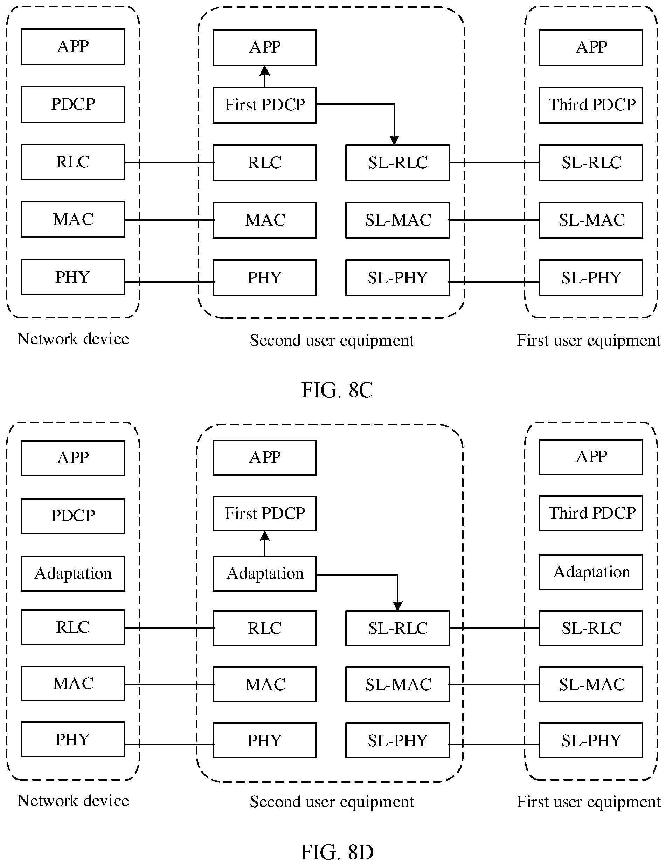

In another example, the first protocol layer entity may be a first PDCP entity. Correspondingly, the upper layer entity of the first protocol layer entity may be an SDAP entity or an APP layer. For example, when both the second user equipment and the at least one first user equipment are interested in the first MBS, the RLC entity may parse the RLC PDU received by the MAC entity, obtain the RLC SDU (that is, a PDCP PDU) through parsing, and send the RLC SDU to the first PDCP entity. The first PDCP entity receives the RLC SDU, and performs a replication operation on the received RLC SDU, to obtain at least two RLC SDUs. The first PDCP entity sends one of the at least two RLC SDUs to an upper layer entity of the first PDCP entity, so that the second user equipment receives the data of the first MBS. Further, the first PDCP entity sends the remaining RLC SDU to at least one SL RLC entity on the right, so that at least one first user equipment receives the RLC SDU, as shown in FIG. 8C (where FIG. 8C includes one first user equipment).

The upper layer entity of the first PDCP entity may be an SDAP entity. For example, an MRB of the second user equipment includes the SDAP entity. Alternatively, the upper layer entity of the first PDCP entity may be an APP layer. For example, an MRB of the second user equipment does not include the SDAP entity.

Optionally, the first PDCP entity may directly send the remaining RLC SDU to at least one SL RLC entity on the right, or may separately send the remaining RLC SDU to at least one first user equipment by using the adaptation layer entity. This is not limited in this embodiment of this application.

In another example, the first protocol layer entity may be an adaptation layer entity. Correspondingly, an upper layer entity of the first protocol layer entity may be any one of a first PDCP entity, an SDAP entity, or an APP layer. For example, when both the second user equipment and the at least one first user equipment are interested in the first MBS, the RLC entity may parse the RLC PDU received by the MAC entity, obtain the RLC SDU through parsing, and send the RLC SDU to the adaptation layer entity. The adaptation layer entity receives the RLC SDU, and performs a replication operation on the received RLC SDU to obtain at least two RLC SDUs. The adaptation layer entity sends one of the at least two RLC SDUs to the upper layer entity of the adaptation layer entity, so that the second user equipment receives the data of the first MBS. Further, the adaptation layer entity sends the remaining RLC SDU to at least one SL RLC entity on the right, so that at least one first user equipment receives the RLC SDU, as shown in FIG. 8D (where FIG. 8D includes one first user equipment).

The upper layer entity of the adaptation layer entity may be a first PDCP entity. For example, an MRB of the second user equipment includes the first PDCP entity. Alternatively, the upper layer entity of the adaptation layer entity may be an SDAP entity. For example, an MRB of the second user equipment includes the SDAP entity but does not include a first PDCP entity. Alternatively, the upper layer entity of the adaptation layer entity may be an APP layer. For example, an MRB of the second user equipment includes the APP layer but does not include a first PDCP entity nor an SDAP entity.

Optionally, the adaptation layer entity may send the remaining RLC SDU to at least one SL RLC entity on the right, or may directly send the remaining RLC SDU to the at least one first user equipment. This is not limited in this embodiment of this application.

In the foregoing embodiment of this application, a complete MRB protocol stack is established between the second user equipment and the network device. The first protocol layer entity in the MRB of the second user equipment may obtain at least two pieces of the data of the first MBS based on the data of the first MBS received from the bottom layer entity. When the second user equipment is also interested in the first MBS, the first protocol layer entity in the MRB of the second user equipment may send one of the at least two pieces of the data of the first MBS to the upper layer entity, so that the second user equipment receives the data of the first MBS, and sends the remaining at least one piece of the data of the first MBS to at least one first user equipment, so that the at least one first user equipment can receive the data of the first MBS. Alternatively, when the second user equipment is not interested in the first MBS, and at least two first user equipments are interested in the first MBS, the first protocol layer entity in the MRB of the second user equipment may separately send each of at least two pieces of the data of the first MBS to the at least two first user equipments, so that both the at least two user equipments can receive the data of the first MBS.

### Example 2

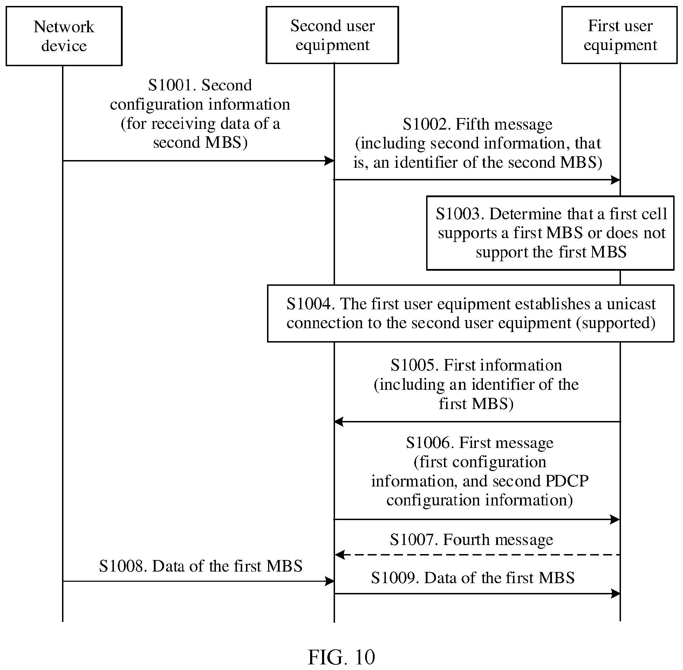

FIG. 10 is a schematic flowchart of another communication method according to an embodiment of this application. Dashed lines in FIG. 10 indicate that the step is an optional step. In the method, before a first user equipment establishes a unicast connection to a second user equipment, the second user equipment may broadcast an MBS supported by a first cell, so that the first user equipment may determine, based on the MBS supported by the first cell, whether to establish the unicast connection to the second user equipment. For example, when the MBS supported by the first cell includes a first MBS, the first user equipment may establish a unicast connection to the second user equipment. This can reduce a delay caused by reselecting another serving cell because an initially accessed serving cell does not support an MBS that the first user equipment is interested in. Step S1001 and step S1004 to step S1009 are respectively the same as step S601, step S602, step S603, and step S607 to step S610 in FIG. 6, and a difference is as follows:
S1002: The second user equipment sends a fifth message to the first user equipment, and the first user equipment receives the fifth message.

For example, the fifth message may include second information, and the second information includes an identifier of a second MBS. For example, the second user equipment may periodically or aperiodically broadcast the fifth message. Before the first user equipment establishes the unicast connection to the second user equipment, the first user equipment may receive, in a discovery (discovery) process, the fifth message broadcast by the second user equipment. Correspondingly, when the first user equipment selects a relay user equipment, if the fifth message broadcast by the second user equipment includes the MBS that the first user equipment is interested in, the second user equipment has a higher priority. In other words, under an equal condition, the first user equipment may preferentially select to establish the unicast connection to the second user equipment. Optionally, the fifth message may be referred to as a discovery message, and is used to discover the remote user equipment.

S1003: The first user equipment determines that the first cell supports the first MBS or does not support the first MBS.

For example, the first user equipment may determine, based on the fifth message, that the first cell supports the first MBS or does not support the first MBS. For example, when the second MBS includes the first MBS, the first user equipment determines that the first cell supports the first MBS, and establishes the unicast connection to the second user equipment, that is, performs content shown in step S1004. Alternatively, when the second MBS does not include the first MBS, the first user equipment may determine that the first cell does not support the first MBS. Optionally, when the second MBS does not include the first MBS, the first user equipment may determine, from other relay user equipments based on received discovery messages of the other relay user equipments, a relay user equipment to which the unicast connection is established. For another example, the first user equipment may establish a unicast connection to the second user equipment to obtain data of a part of first MBSs, or may determine, from other relay user equipments based on discovery messages of the other relay user equipments, a relay user equipment to which a unicast connection is established. For example, the first user equipment is interested in a plurality of MBSs, and the second MBS includes the part of first MBSs.

For example, the first user equipment may further measure an SL reference signal between the first user equipment and the second user equipment, and further select, based on a measurement result, a second user equipment to which a unicast connection is established or determine whether to establish a unicast connection to the second user equipment. For example, the second MBS includes the first MBS, but communication quality of the second user equipment is very poor, and the first user equipment may determine not to establish the unicast connection to the second user equipment. For another example, there are a plurality of second user equipments. The first user equipment may select, based on a measurement result of each of the plurality of second user equipments, a second user equipment from the plurality of second user equipments as the user equipment to which the unicast connection is established. For example, the second user equipment may select, from a plurality of second user equipments, a second user equipment with best communication quality as the user equipment to which the unicast connection is established.

In the foregoing embodiment of this application, before the second user equipment establishes the unicast connection to the first user equipment, the first user equipment may select, based on fifth messages broadcast by surrounding relay user equipments, a relay user equipment with a highest priority, and establish the unicast connection to the relay user equipment with the highest priority. The highest priority means that a serving cell of the relay user equipment supports an MBS that the first user equipment is interested in. In this way, after the first user equipment establishes the unicast connection to the second user equipment, the second user equipment may directly send the first message to the first user equipment, so that the first user equipment can receive the data of the first MBS from the network device. This can reduce a delay caused by reselecting another serving cell because an initially accessed serving cell does not support the MBS that the first user equipment is interested in, and improve data transmission efficiency.

### Example 3

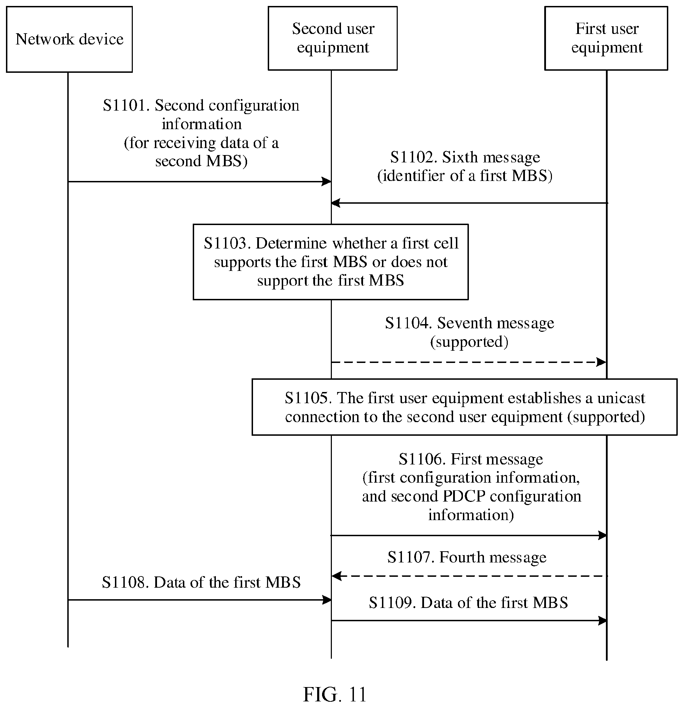

FIG. 11 is a schematic flowchart of another communication method according to an embodiment of this application. Dashed lines in FIG. 11 indicate that the step is an optional step. In the method, before a first user equipment establishes a unicast connection to a second user equipment, the first user equipment may broadcast, to the outside, an MBS that the first user equipment is interested in, to discover at least one second user equipment that supports a first MBS, so that the first user equipment may determine, from the at least one second user equipment that supports the first MBS, a second user equipment to which a unicast connection is established. This reduces a delay caused by reselecting another serving cell because an initially accessed serving cell does not support the MBS that the first user equipment is interested in. Step S1101 and step S1105 to step S1109 are respectively the same as step S601, step S602, and step S607 to step S610 in FIG. 6, and a difference is as follows:
S1102: The first user equipment sends a sixth message to the second user equipment, and the second user equipment receives the sixth message.

For example, the sixth message includes the first information or an identifier of the first MBS. Before the first user equipment establishes the unicast connection to the second user equipment, the first user equipment may broadcast the sixth message in a discovery process, and the second user equipment receives the sixth message. Optionally, the sixth message may be a discovery request message for discovering a relay user equipment that supports the first MBS.

S1103: The second user equipment determines that a first cell supports the first MBS or does not support the first MBS.

For example, the second user equipment may determine, based on second configuration information, that the first cell supports the first MBS or does not support the first MBS. For example, if a second MBS includes the first MBS, the second user equipment determines that the first cell supports the first MBS, and performs content shown in step S1104 to step S1109 or step S1105 to step S1109. Alternatively, if the second MBS does not include the first MBS, the second user equipment determines that the first cell does not support the first MBS, and discards the sixth message. For another example, the first user equipment is interested in a plurality of MBSs. When the second MBS includes a part of first MBSs, the second user equipment may also perform content shown in step S1104, so that the first user equipment obtains data of the part of first MBSs, or the second user equipment may discard the sixth message. Discarding may be an operation such as deletion or ignoring. This is not limited in this embodiment of this application.

Optionally, when the first cell supports the first MBS, the second user equipment may perform content shown in step S1104, or may not perform content shown in step S1104. This is not limited in this embodiment of this application.

S1104: The second user equipment sends a seventh message to the first user equipment, and the first user equipment receives the seventh message.

For example, the seventh message may indicate that the first cell supports the first MBS. For example, when the second user equipment determines that the first cell supports the first MBS, the second user equipment may send the seventh message to the first user equipment, to indicate that the first cell supports the first MBS. Alternatively, the seventh message may further indicate a first MBS supported by the first cell or a first MBS not supported by the first cell. For example, when the second user equipment determines that the first cell supports a part of first MBSs, the second user equipment may also send the seventh message to the first user equipment, to indicate a first MBS supported by the first cell and/or a first MBS in the part of first MBSs not supported by the first cell. Optionally, the seventh message further includes at least one of an identifier of the second MBS, an identifier of a first MBS supported by the first cell, or an identifier of a first MBS not supported by the first cell. Optionally, the seventh message may be a discovery response message for responding to a sixth message of a remote user equipment.

For example, after the first user equipment receives the seventh message of the second user equipment (that is, after step S1104), the first user equipment may measure an SL reference signal between the first user equipment and the second user equipment, and further select, based on a measurement result, a second user equipment to which a unicast connection is established or determine whether to establish a unicast connection to the second user equipment. For example, the second MBS includes the first MBS, but communication quality of the second user equipment is very poor, and the first user equipment may determine not to establish the unicast connection to the second user equipment. For another example, there are a plurality of second user equipments. The first user equipment may select, based on a measurement result of each of the plurality of second user equipments, a second user equipment from the plurality of second user equipments as the user equipment to which the unicast connection is established. For example, the second user equipment may select, from the plurality of second user equipments, a second user equipment with best communication quality as the user equipment to which the unicast connection is established.

In the foregoing embodiment of this application, before the second user equipment establishes the unicast connection to the first user equipment, the first user equipment actively broadcasts the sixth message to surrounding user equipments, to discover a relay user equipment that supports the first MBS. When a serving cell of the second user equipment supports the first MBS, the second user equipment sends a seventh message to the first user equipment, to respond to the sixth message of the first user equipment. The first user equipment receives a seventh message from at least one surrounding second user equipment, and selects, based on the seventh message or the seventh message and communication quality of the second user equipment, a second user equipment from the at least one second user equipment to establish the unicast connection with the first user equipment. After the unicast connection is established, the second user equipment may send a first message to the first user equipment, so that the first user equipment establishes a first SL radio bearer, the first user equipment may receive data of an MBS from a network device through the first SL radio bearer. This can reduce a delay caused by reselecting another serving cell because an initially accessed serving cell does not support the MBS that the first user equipment is interested in, and improve data transmission efficiency.

### Example 4

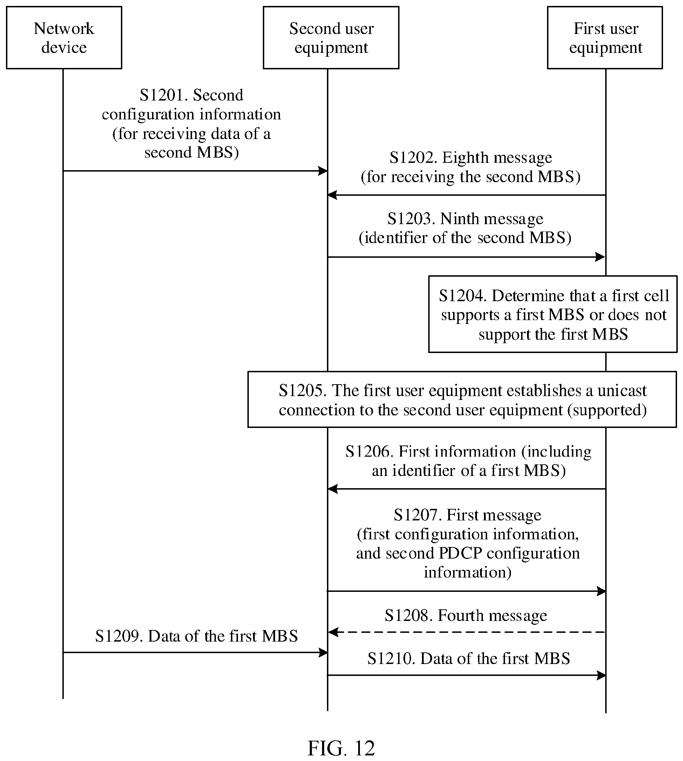

FIG. 12 is a schematic flowchart of another communication method according to an embodiment of this application. Dashed lines in FIG. 12 indicate that the step is an optional step. In the method, before a first user equipment establishes a unicast connection to a second user equipment, the first user equipment may broadcast, to the outside, an eighth message, to obtain an MBS supported by a surrounding relay user equipment, so that the first user equipment may determine, based on the MBS supported by the surrounding relay user equipment, a relay user equipment to which the unicast connection is established. For example, the first user equipment may select a relay user equipment that supports a first MBS to establish the unicast connection. This can reduce a delay caused by reselecting another serving cell because an initially accessed serving cell does not support an MBS that the first user equipment is interested in. Step S1201 and step S1205 to step S1210 are respectively the same as step S601, step S602, step S603, and step S607 to step S610 in FIG. 6, and a difference is as follows:
S1202: The first user equipment sends an eighth message to the second user equipment, and the second user equipment receives the eighth message.

For example, the eighth message includes fifth indication information, and the fifth indication information indicates to obtain an MBS supported by a serving cell of the relay user equipment. For example, the first user equipment may broadcast, to the outside, an eighth message in a discovery process, and a surrounding relay user equipment may receive the eighth message, to obtain the MBS supported by the serving cell of the surrounding relay user equipment.

S1203: The second user equipment sends a ninth message to the first user equipment, and the first user equipment receives the ninth message.

For example, the ninth message includes an identifier of a second MBS. For example, after receiving the eighth message, the second user equipment sends the ninth message to the first user equipment as a response, so that the first user equipment determines an MBS supported by a serving cell of the second user equipment.

S1204: The first user equipment determines that the first cell supports the first MBS or does not support the first MBS.

For example, the first user equipment may determine, based on the ninth message, that the first cell supports the first MBS or does not support the first MBS. For example, if the second MBS includes the first MBS, the first user equipment determines that the first cell supports the first MBS, and performs content shown in step S1205 to step S1210. Alternatively, if the second MBS does not include the first MBS, the second user equipment determines that the first cell does not support the first MBS, and discards the ninth message. Optionally, when the first cell does not support the first MBS, the first user equipment may determine, from other relay user equipments based on ninth messages fed back by the other relay user equipments, a relay user equipment to which the unicast connection is established. For another example, the first user equipment is interested in a plurality of MBSs. When the second MBS includes a part of first MBSs, the first user equipment may establish a unicast connection to the second user equipment to obtain data of the part of first MBSs, or may determine, from other relay user equipments based on ninth messages fed back by the other relay user equipments, a relay user equipment to which the unicast connection is established.

For example, after the first user equipment determines that the first cell supports the first MBS (that is, after step S 1204), the first user equipment may further measure an SL reference signal between the first user equipment and the second user equipment, and further select, based on a measurement result, a second user equipment to which the unicast connection is established or determine whether to establish the unicast connection to the second user equipment. For example, the second MBS includes the first MBS, but communication quality of the second user equipment is very poor, and the first user equipment may determine not to establish the unicast connection to the second user equipment. For another example, there are a plurality of second user equipments. The first user equipment may select, based on a measurement result of each of the plurality of second user equipments, a second user equipment from the plurality of second user equipments as the user equipment to which the unicast connection is established. For example, the second user equipment may select, from a plurality of second user equipments, a second user equipment with best communication quality as the user equipment to which the unicast connection is established.

In the foregoing embodiment of this application, before the second user equipment establishes the unicast connection to the first user equipment, the first user equipment may broadcast an eighth message to surrounding second user equipments, to obtain an MBS supported by a serving cell of the surrounding second user equipments. The first user equipment determines, based on ninth messages sent by surrounding second user equipments, that at least one second user equipment supports the first MBS, and selects a second user equipment from the at least one second user equipment to establish the unicast connection to the first device. After the first user equipment establishes the unicast connection to the second device, the first user equipment may send first information to the second user equipment, so that the second user equipment can receive, based on the first information, the data of the first MBS broadcast by the network device, and forward the data of the first MBS to the first user equipment. After receiving the first information of the first user equipment, the second user equipment sends the first message to the first user equipment, so that the first user equipment can receive the data of the first MBS from the network device. According to the foregoing method, a problem that the first user equipment cannot receive the data of the MBS because the second user equipment does not forward the data of the MBS broadcast by the network device to the first user equipment can be resolved. This can reduce a delay caused by reselecting another serving cell because an initially accessed serving cell does not support the MBS that the first user equipment is interested in, and improve data transmission efficiency.

### Example 5

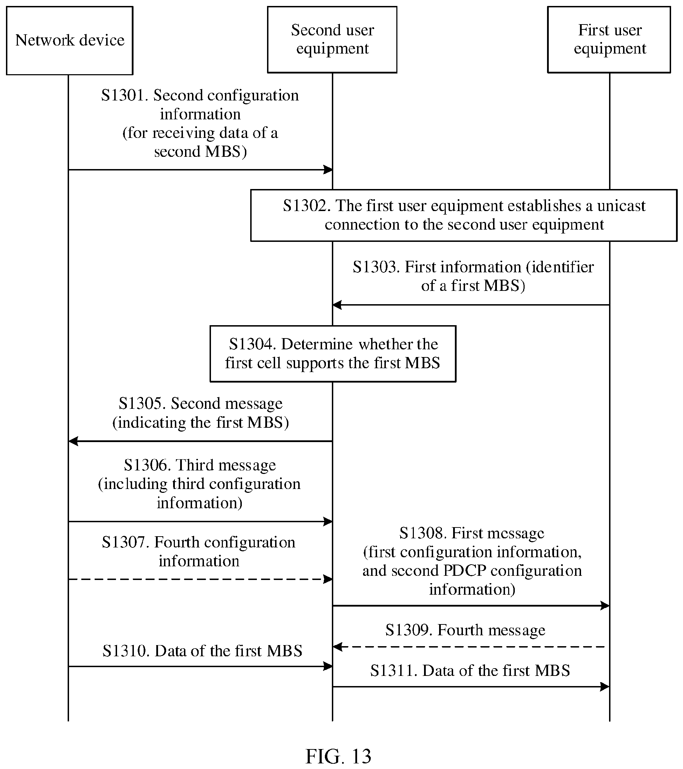

FIG. 13 is a schematic flowchart of another communication method according to an embodiment of this application. Dashed lines in FIG. 13 indicate that the step is an optional step. In this method, regardless of whether a first cell supports a first MBS or does not support the first MBS, a second user equipment may report first information from a first user equipment to a network device, so that the network device may configure, for the first user equipment, third configuration information for receiving data of the first MBS. Therefore, the first user equipment can receive, based on the third configuration information, the data of the first MBS broadcast by the network device. Therefore, adaptability is good. When the first cell does not support the first MBS, the network device may further initiate the first MBS based on the first information, and configure, for the second user equipment, fourth configuration information for receiving the data of the first MBS, so that the second user equipment can receive the data of the first MBS, and forward the data of the first MBS to the first user equipment. Step S1301 to step S1304 and step S1308 to step S1311 are respectively the same as step S601 to step S604 and step S607 to step S610 in FIG. 6, and a difference is as follows:
S1305: The second user equipment sends a second message to the network device, and the network device receives the second message.

For example, the second message may include third indication information, and the third indication information indicates the first MBS. The third indication information may implicitly indicate the network device to configure, for the first user equipment, third configuration information for establishing a first SL radio bearer. For example, regardless of whether the first cell supports the first MBS or does not support the first MBS, the second user equipment may send the second message to the network device, and the network device receives the second message. The third indication information may be an identifier of the first MBS, an index of the first MBS, a number of the first MBS, or the like. For example, before step S1305, the second user equipment may receive MBS information supported by the network device. For example, the MBS information may be an MBS identifier list. The MBS identifier list includes the identifier of the first MBS. The second user equipment may indicate a location of the first MBS in the MBS identifier list by using the number of the first MBS, the index of the first MBS, or the like. For another example, the second user equipment may directly send the identifier of the first MBS to the network device.

For example, the second message may request to obtain the third configuration information, or request to obtain the third configuration information and fourth configuration information. For example, when the second user equipment determines that the first cell supports the first MBS, a first radio bearer may be established (or a first radio bearer may not be established) between the second user equipment and the network device, and the second message may request to obtain the third configuration information (or the third configuration information and the fourth configuration information). For another example, when the second user equipment determines that the first cell does not support the first MBS, the second message may request to obtain the third configuration information and the fourth configuration information.

The third configuration information may be for configuring the first SL radio bearer between the first user equipment and the second user equipment, and the first SL radio bearer may be for transmitting the data of the first MBS. Optionally, the third configuration information may be first configuration information. For example, after receiving the third configuration information from the network device, the second user equipment directly forwards the third configuration information to the first user equipment. In this case, the third configuration information is the first configuration information. For another example, after receiving the third configuration information from the network device, the second user equipment processes the third configuration information, for example, adds a correspondence between the first SL radio bearer and each of a plurality of first MBSs, or reduces information such as an identifier of the network device. In this case, the third configuration information is not the first configuration information. The fourth configuration information may be for configuring a first radio bearer between the second user equipment and the network device, and the first radio bearer may be for transmitting the data of the first MBS.

S1306: The network device sends a third message to the second user equipment, and the second user equipment receives the third message.

For example, after receiving the second message, the network device may send the third message to the second user equipment, and the second user equipment receives the third message. The third message includes the third configuration information. Optionally, the third message may further include the fourth configuration information. For example, when the first cell supports the first MBS, but the first radio bearer is not established between the network device and the second user equipment, the third message may further include the fourth configuration information; or when the first cell does not support the first MBS, the third message may further include the fourth configuration information.

Optionally, the third message may include or may not include the fourth configuration information. For example, when the fourth configuration information is configured on the network device, and the third message does not include the fourth configuration information, the network device may send the fourth configuration information to the second user equipment by using dedicated signaling (such as RRC signaling or MAC signaling), that is, perform content shown in step S1307. For another example, when the fourth configuration information is configured on the network device, and the third message includes the fourth configuration information, the network device does not need to perform content shown in step S1307. For another example, when the fourth configuration information is not configured on the network device, the network device does not need to perform content shown in step S1307.

S1307: The network device sends the fourth configuration information to the second user equipment, and the second user equipment receives the fourth configuration information.

For example, the network device may send the fourth configuration information to the second user equipment by using RRC signaling, MAC signaling, or the like, and the second user equipment receives the fourth configuration information. After receiving the fourth configuration information, the second user equipment may establish the first radio bearer between the second user equipment and the network device based on the fourth configuration information, to receive the data of the first MBS from the network device.

For example, the fourth configuration information may further include an identifier of the first user equipment. For example, when a plurality of first user equipments are interested in the first MBS, the second user equipment may separately forward the data of the first MBS from the network device to the plurality of first user equipments based on an identifier of each of the plurality of first user equipments, so that the plurality of first user equipments can receive the data of the first MBS from the network device.

In the foregoing embodiment of this application, the second user equipment sends the second message to the network device, to notify the network device of the MBS that the first user equipment is interested in. When the first cell supports the first MBS, the network device may send the third configuration information to the first user equipment, so that the first user equipment receives the data of the first MBS from the network device by using the second user equipment. When the first cell does not support the first MBS, the network device may send the third configuration information to the first user equipment, and send the fourth configuration information to the second user equipment, so that the first user equipment can receive the data of the first MBS by using the second user equipment. In other words, regardless of whether the first cell supports the first MBS or does not support the first MBS, the network device configures the first SL radio bearer between the first user equipment and the second user equipment, or configures the first radio bearer between the network device and the second user equipment, so that the first user equipment can receive the MBS that the first user equipment is interested in. This can resolve a problem that in a UE-to-Network relay scenario, the remote user equipment cannot receive the data of the MBS because no unicast connection is established between the remote user equipment and the network device for the MBS, and can improve adaptability.

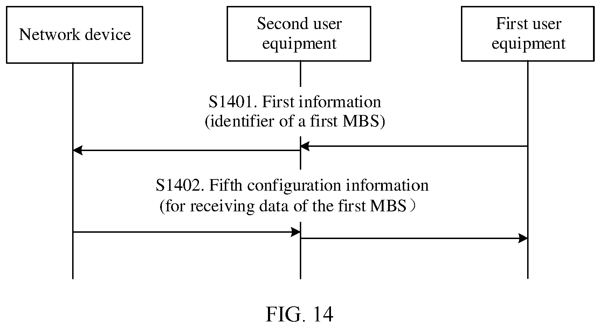

FIG. 14 is a schematic flowchart of another communication method according to an embodiment of this application. The method may be applied to the communication system 100 shown in FIG. 1. A network device in this embodiment of this application may be the network device shown in FIG. 1, a first user equipment may be the remote user equipment shown in FIG. 1, and a second user equipment may be the relay user equipment shown in FIG. 1. It should be understood that, in this embodiment of this application, a step performed by the network device may also be specifically performed by a module or a component of the network device, for example, may be performed by a chip or a chip system in the network device; a step performed by the user equipment may also be specifically performed by a module or a component of the user equipment, for example, may be performed by a chip or a chip system in the user equipment. As shown in FIG. 14, the method may include the following steps.

S1401: The first user equipment sends first information to the network device by using the second user equipment, and the network device receives the first information from the first user equipment by using the second user equipment.

For example, the first information may include an identifier of a first MBS, such as a TMGI and/or a session identifier. The first MBS is an MBS that the first user equipment is interested in. The MBS that the first user equipment is interested in may be an MBS that the first MBS wants to obtain, an MBS supported by the first user equipment, an MBS required by the first user equipment, or the like. This is not limited in this embodiment of this application.

For example, after the first user equipment establishes an RRC connection to the network device by using the second user equipment, the first user equipment may report, to the network device by using the second user equipment, an identifier of the MBS that the first user equipment is interested in, so that the network device configures, for the first user equipment, fifth configuration information for receiving data of the first MBS. Alternatively, after the first user equipment establishes an RRC connection to the network device by using the second user equipment, a user performs an operation of obtaining data of the first MBS on the first user equipment, to trigger the first user equipment to send the first information to the network device by using the second user equipment, so that the network device configures, for the first user equipment, fifth configuration information for receiving the data of the first MBS. For a protocol stack through which a message is exchanged between the network device and the first terminal by using the second user equipment, refer to FIG. 2A (which may be understood as that the first information is sent from an RRC entity of remote UE to an RRC entity of a gNB through a PC5 interface and a Uu interface in the figure).

For a specific implementation process of step S1401, refer to content shown in step S1503 and step S1504 in Example 6 below.

S1402: The network device sends the fifth configuration information to the first user equipment by using the second user equipment, and the first user equipment receives the fifth configuration information from the network device by using the second user equipment.

For example, the fifth configuration information is used by the first user equipment to receive the data of the first MBS. For example, after receiving the first information, the network device may send the fifth configuration information to the first user equipment by using the second user equipment as a response, so that the first user equipment may receive the data of the first MBS from the network device by using the fifth configuration information. For a protocol stack through which a message is exchanged between the network device and the first terminal by using the second user equipment, refer to FIG. 2A (which may be understood as that the fifth configuration information is sent from an RRC entity of a gNB to an RRC entity of remote UE through a Uu interface and a PC5 interface in the figure).

For example, the fifth configuration information may include second PDCP configuration information, where the second PDCP configuration information is for configuring a third PDCP entity, and the third PDCP entity is for receiving the data of the first MBS. For example, the data of the first MBS sent by the network device is processed by a PDCP entity. Correspondingly, the first user equipment needs to establish a peer PDCP entity, to ensure that the data of the first MBS from the network device is successfully received.

For a specific implementation process of step S1402, refer to content shown in step S1507 and step S1508 in Example 6 below.

The following describes in detail the communication method shown in FIG. 14 with reference to Example 6.

### Example 6

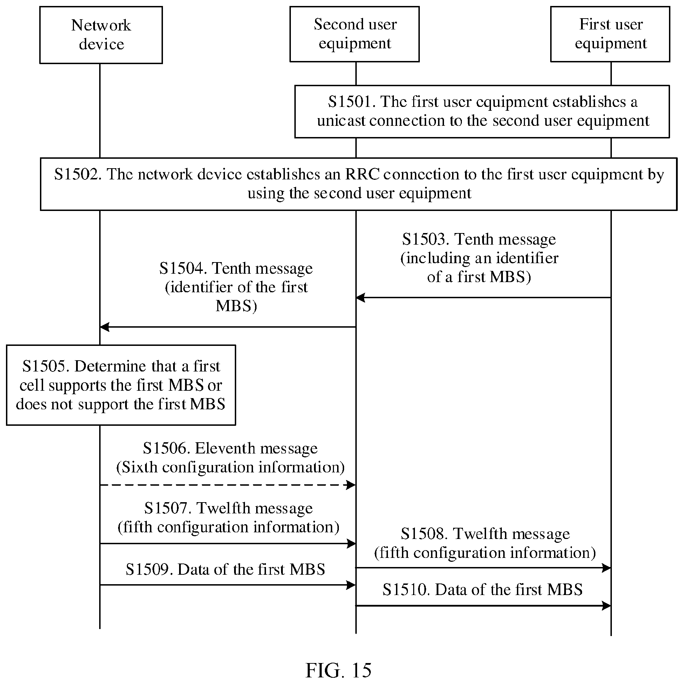

FIG. 15 is a schematic flowchart of a communication method according to an embodiment of this application. Dashed lines in FIG. 15 indicate that the step is an optional step. The method may be performed by a user equipment and a network device, or may be performed by a chip in the user equipment and a chip in the network device. A network device in FIG. 15 may be the network device in FIG. 1, a first user equipment may be the remote user equipment in FIG. 1, and a second user equipment may be the relay user equipment in FIG. 1. In the method, regardless of whether a first cell supports a first MBS or does not support the first MBS, after the first user equipment establishes an RRC connection to the network device by using the second user equipment, the first user equipment may report an identifier of the first MBS to the network device by using the second user equipment, so that the network device configures, for the first user equipment, fifth configuration information for receiving data of the first MBS, and the first user equipment can receive, based on the fifth configuration information, the data of the first MBS broadcast by the network device. Therefore, adaptability is good. When the first cell does not support the first MBS, the network device may further initiate the first MBS, and configure, for the second user equipment, sixth configuration information for receiving the data of the first MBS, so that the second user equipment can receive the data of the first MBS, and forward the data of the first MBS to the first user equipment. Step S1501, step S1509, and step S1510 are respectively the same as step S602, step S609, and step S610 in FIG. 6, and a difference is as follows.

S1502: The network device establishes an RRC connection to the first user equipment by using the second user equipment.

For example, after the unicast connection is established between the first user equipment and the second user equipment, the network device may establish an RRC connection to the first user equipment by using the second user equipment, so that the network device may provide a service for the first user equipment by using the second user equipment. An RRC connection exists between the network device and the second user equipment, and an SL unicast connection exists between the second user equipment and the first user equipment.

S1503 to S1504: The first user equipment sends a tenth message to the network device by using the second user equipment, and the network device receives the tenth message from the first user equipment by using the second user equipment.

The tenth message includes first information, and the first information includes the identifier of the first MBS. For a protocol stack through which the network device and the first terminal exchange the tenth message by using the second user equipment, refer to FIG. 2A (which may be understood as that the tenth message is sent from an RRC entity of remote UE to an RRC entity of a gNB through a PC5 interface and a Uu interface in the figure).

For example, after the first user equipment establishes an RRC connection to the network device by using the second user equipment, the first user equipment may report, to the network device by using the second user equipment, the identifier of the MBS that the first user equipment is interested in, so that the network device configures, for the first user equipment, the fifth configuration information for receiving the data of the first MBS. Alternatively, after the first user equipment establishes the RRC connection to the network device by using the second user equipment, a user performs an operation of obtaining the data of the first MBS on the first user equipment, to trigger the first user equipment to send the first information to the network device by using the second user equipment, so that the network device configures, for the first user equipment, the fifth configuration information for receiving the data of the first MBS. Specifically, the first user equipment may send the tenth message to the second user equipment through a PC5 interface, and the second user equipment receives the tenth message through the PC5 interface. After receiving the tenth message by using the PC5 interface, the second user equipment forwards the tenth message to the network device through the Uu interface, and the network device receives the tenth message through the Uu interface. Optionally, the tenth message may further include an identifier of the first user equipment.

For example, the tenth message may request to obtain the fifth configuration information, or request to obtain the fifth configuration information and the sixth configuration information. For example, when the first cell supports the first MBS, the network device may have configured the sixth configuration information for receiving the data of the first MBS (or may not configure the sixth configuration information) for the second user equipment. The tenth message may request to obtain the fifth configuration information (or the fifth configuration information and the sixth configuration information). For another example, when the first cell does not support the first MBS, the tenth message may request to obtain the fifth configuration information and the sixth configuration information.

S1505: The network device determines that the first cell supports the first MBS or does not support the first MBS.

For example, if a second MBS includes the first MBS, the network device may determine that the first cell supports the first MBS; or if a second MBS does not include the first MBS, the network device may determine that the first cell does not support the first MBS.

Optionally, when the first cell supports the first MBS, the network device may send the fifth configuration information to the first user equipment by using the second user equipment, that is, perform content shown in step S1507 and step S1508. Alternatively, when the first cell does not support the first MBS, the network device may send the fifth configuration information to the first user equipment by using the second user equipment, and send the sixth configuration information to the second user equipment, that is, perform content shown in step S1506 to step S1508.

S1506: The network device sends an eleventh message to the second user equipment, and the second user equipment receives the eleventh message.

For example, the eleventh message may include the identifier of the first user equipment, so that the second user equipment forwards the data of the first MBS to the first user equipment based on the identifier of the first user equipment. Optionally, the eleventh message may indicate a correspondence between the first MBS and the identifier of the first user equipment. For example, when a plurality of first user equipments are interested in the first MBS, the second user equipment may separately forward the data of the first MBS to the plurality of first user equipments based on a correspondence between an identifier of each of the plurality of first user equipments and the first MBS, so that the plurality of first user equipments can successfully receive the data of the first MBS.

For example, the eleventh message may further include the sixth configuration information, and the sixth configuration information is used by the second user equipment to receive the data of the first MBS. For example, the sixth configuration information may include one or more of the following: the identifier of the first MBS, information about a second time-frequency resource, or information about a second MRB. The second time-frequency resource is for carrying the first MBS, the second MRB is for transmitting the data of the first MBS, the information about the second MRB includes third PDCP configuration information, the third PDCP configuration information is for configuring a first PDCP entity, and the first PDCP entity is for receiving the data of the first MBS.

For example, the sixth configuration information may indicate a correspondence between each of a plurality of first MBSs and the first PDCP entity. For example, when there are a plurality of first MBSs, the second user equipment may receive data of the plurality of first MBSs by using a correspondence between each of the plurality of first MBSs and the first PDCP entity. For example, the plurality of first MBSs include a first MBS_1 and a first MBS_2, the first PDCP entity includes a first PDCP entity 1 and a first PDCP entity 2, the sixth configuration information may indicate that the first PDCP entity 1 is configured to receive data of the first MBS_1 and the second PDCP entity 2 is configured to receive data of the first MBS_2, and the second user equipment may separately receive, based on content indicated by the sixth configuration information, the first MBS_1 and the first MBS_2 from the network device by using the first PDCP entity 1 and the first PDCP entity 2.

S1507 and S1508: The network device sends a twelfth message to the first user equipment by using the second user equipment, and the first user equipment receives the twelfth message from the network device by using the second user equipment.

For a protocol stack through which the twelfth message is exchanged between the network device and the first terminal by using the second user equipment, refer to FIG. 2A (which may be understood as that the twelfth message is sent from an RRC entity of a gNB to an RRC entity of remote UE through a Uu interface and a PC5 interface in the figure).

For example, the twelfth message may include the fifth configuration information, and the fifth configuration information is used by the first user equipment to receive the data of the first MBS. For example, the network device may send the twelfth message to the second user equipment through a Uu interface, and the second user equipment receives the twelfth message through the Uu interface. After receiving the twelfth message through the Uu interface, the second user equipment may forward the twelfth message to the first user equipment through a PC5 interface, and the first user equipment receives the twelfth message through the PC5 interface.

For example, the fifth configuration information may further include second PDCP configuration information, where the second PDCP configuration information is for configuring a third PDCP entity, and the third PDCP entity is for receiving the data of the first MBS. For example, the data of the first MBS sent by the network device is processed by a PDCP entity. Correspondingly, the first user equipment needs to establish a peer PDCP entity, to ensure that the data of the first MBS from the network device is successfully received.

For example, the fifth configuration information may indicate a correspondence between each of a plurality of first MBSs and the third PDCP entity. For example, when the first user equipment is interested in a plurality of MBSs, the first user equipment may receive data of the plurality of first MBSs based on the correspondence between each of the plurality of first MBSs and the third PDCP entity. For example, the plurality of first MBSs include a first MBS_1 and a first MBS_2, the third PDCP entity includes a third PDCP entity 1 and a third PDCP entity 2, the fifth configuration information may indicate that the third PDCP entity 1 is configured to receive data of the first MBS_1 and the third PDCP entity 2 is configured to receive data of the first MBS_2, and the first user equipment may separately receive, based on content indicated by the fifth configuration information, the first MBS_1 and the first MBS_2 from the network device by using the third PDCP entity 1 and the third PDCP entity 2.

In the foregoing embodiment of this application, after the network device establishes the connection to the first user equipment by using the second user equipment, the first user equipment may send the first information to the network device by using the second user equipment. After receiving the first information, the network device may configure, for the first user equipment, the fifth configuration information for receiving the data of the first MBS, so that the first user equipment may receive, based on the fifth configuration information by using the second device, the data of the first MBS from the network device. This resolves a problem that in a UE-to-Network relay scenario, a remote user equipment cannot receive data of an MBS that the remote user equipment is interested in.

It should be noted that an execution sequence of the steps in Example 1 to Example 6 above is merely an example. This is not limited in this embodiment of this application. For example, in Example 1, the network device may send the second configuration information to the second user equipment before the second device establishes the unicast connection to the first user equipment, or may send the second configuration information to the second user equipment after the second user equipment establishes the unicast connection to the first user equipment. For another example, in Example 5, the network device may first send the third message to the second user equipment, and then send the fourth configuration information to the second user equipment; or may first send the fourth configuration information to the second user equipment, and then send the third message to the second user equipment; or may send the third message and the fourth configuration information to the second user equipment at the same time. For another example, in Example 6, the network device may first send the eleventh message to the second user equipment, and then send the twelfth message to the second user equipment; or may first send the twelfth message to the second user equipment, and then send the eleventh message to the second user equipment; or may send both the eleventh message and the twelfth message to the second user equipment.

In the foregoing embodiments provided in this application, the methods provided in embodiments of this application are separately described from perspectives of the network device, the relay user equipment, the remote user equipment, and interaction among the three. To implement functions in the methods provided in the foregoing embodiments of this application, the positioning server, the access network device, and the at least one terminal each may include a hardware structure and/or a software module, and implement the foregoing functions by using the hardware structure, the software module, or a combination of the hardware structure and the software module. Whether a function of the foregoing functions is performed by using a hardware structure, a software module, or a combination of a hardware structure and a software module depends on a specific application and a design constraint condition of the technical solutions.

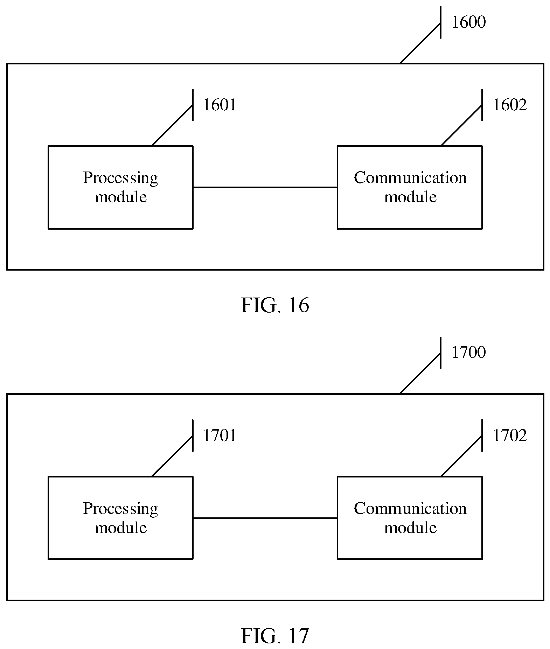

FIG. 16 is a schematic structural diagram of a communication apparatus 1600. The communication apparatus 1600 may be the second user equipment (or the first user equipment) in any one of the embodiments shown in FIG. 5, FIG. 6, and FIG. 9 to FIG. 15, and can implement functions of the second user equipment (or the first user equipment) in the methods provided in embodiments of this application. Alternatively, the communication apparatus 1600 may be an apparatus that can support the second user equipment (or the first user equipment) in implementing the functions of the second user equipment (or the first user equipment) in the methods provided in embodiments of this application. The communication apparatus 1600 may be a hardware structure, a software module, or a combination of a hardware structure and a software module. The communication apparatus 1600 may be implemented by a chip system. In this embodiment of this application, the chip system may include a chip, or may include a chip and another discrete component.

The communication apparatus 1600 may include a processing module 1601 and a communication module 1602.

For example, the processing module 1601 may be configured to perform step S604 in the embodiment shown in FIG. 6, step S1103 in the embodiment shown in FIG. 11, or step S1303 in the embodiment shown in FIG. 13, and/or another process used to support the technology described in this specification.

For example, the communication module 1602 may be configured to perform steps S501 and S502 in the embodiment shown in FIG. 5, or step S601, step S602, and step S605 to step S610 in the embodiment shown in FIG. 6, or step S1001, step S1002, and step S1005 to step S1009 in the embodiment shown in FIG. 10, and/or another process used to support the technology described in this specification.

For another example, the processing module 1601 may be configured to perform step S1003 in the embodiment shown in FIG. 10, or step S1204 in the embodiment shown in FIG. 12, and/or another process used to support the technology described in this specification.

For another example, the communication module 1602 may be configured to perform step S603, step S605 to step S608, and step S610 in the embodiment shown in FIG. 6, or step S1102, step S1104, step S1106, step S1107, and step S1109 in the embodiment shown in FIG. 11, and/or another process used to support the technology described in this specification.

The communication module 1602 is used by the communication apparatus 1600 to communicate with another module. The communication module 1602 may be a circuit, a component, an interface, a bus, a software module, a transceiver, or any other apparatus that can implement communication.

All related content of the steps in the foregoing method embodiments may be cited in function descriptions of corresponding function modules. Details are not described herein again.

It should be noted that the processing module may also be referred to as a processing unit, a processor, a processing apparatus, a processing board, or the like, and the communication module may also be referred to as a transceiver module, a transceiver, a transceiver unit, a transceiver circuit, or the like. This is not limited in this embodiment of this application.

FIG. 17 is a schematic structural diagram of a communication apparatus 1700. The communication apparatus 1700 may be the network device in any one of the foregoing embodiments shown in FIG. 5, FIG. 6, and

FIG. 9 to FIG. 15, and can implement functions of the network device in the methods provided in embodiments of this application. Alternatively, the communication apparatus 1700 may be an apparatus that can support the network device in implementing functions of the network device in the methods provided in embodiments of this application. The communication apparatus 1700 may be a hardware structure, a software module, or a combination of a hardware structure and a software module. The communication apparatus 1700 may be implemented by a chip system. In this embodiment of this application, the chip system may include a chip, or may include a chip and another discrete component.

The communication apparatus 1700 may include a processing module 1701 and a communication module 1702.

For example, the processing module 1701 may be configured to perform step S1505 in the embodiment shown in FIG. 15, or configured to control the communication module 1702 to perform the steps in the embodiment shown in any one of FIG. 5, FIG. 6, and FIG. 9 to FIG. 15, and/or another process used to support the technology described in this specification.

For example, the communication module 1702 may be configured to perform step S601 and step S609 in the embodiment shown in FIG. 6, or step S1001 and step S1008 in the embodiment shown in FIG. 10, and/or another process used to support the technology described in this specification.

The communication module 1702 is used by the communication apparatus 1700 to communicate with another module. The communication module 1702 may be a circuit, a component, an interface, a bus, a software module, a transceiver, or any other apparatus that can implement communication.

All related content of the steps in the foregoing method embodiments may be cited in function descriptions of corresponding function modules. Details are not described herein again.

It should be noted that the processing module may also be referred to as a processing unit, a processor, a processing apparatus, a processing board, or the like, and the communication module may also be referred to as a transceiver module, a transceiver, a transceiver unit, a transceiver circuit, or the like. This is not limited in this embodiment of this application.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

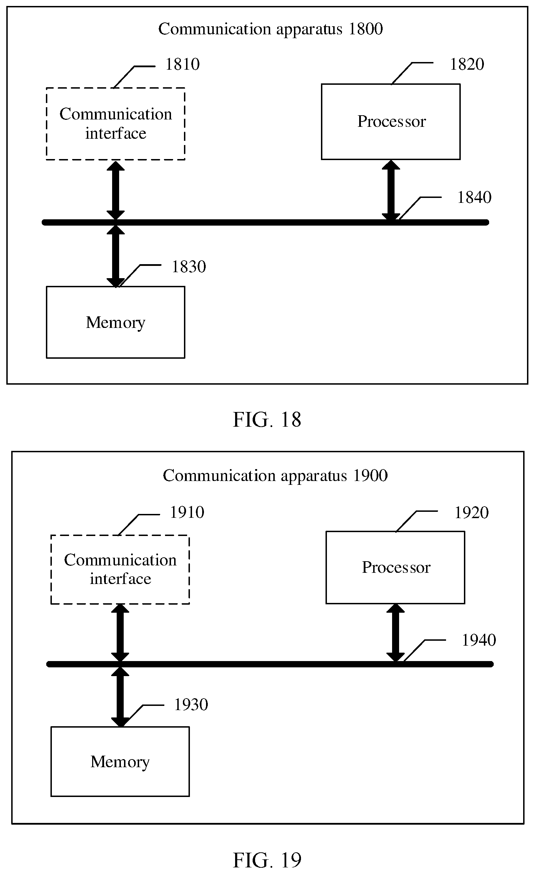

FIG. 18 shows a communication apparatus 1800 according to an embodiment of this application. The communication apparatus 1800 may be the second user equipment (or the first user equipment) in any one of the embodiments shown in FIG. 5, FIG. 6, and FIG. 9 to FIG. 15, and can implement functions of the second user equipment (or the first user equipment) in the methods provided in embodiments of this application. Alternatively, the communication apparatus 1800 may be an apparatus that can support the second user equipment (or the first user equipment) in implementing the functions of the second user equipment (or the first user equipment) in the methods provided in embodiments of this application. The communication apparatus 1800 may be a chip system. In this embodiment of this application, the chip system may include a chip, or may include a chip and another discrete component.

In hardware implementation, the communication module 1602 may be a transceiver, and the transceiver is integrated into the communication apparatus 1800 to form a communication interface 1810.

The communication apparatus 1800 includes at least one processor 1820, configured to implement or support the communication apparatus 1800 in implementing the functions of the second user equipment in the methods provided in the embodiments of this application. For example, the processor 1820 may determine, based on second configuration information, that a first cell supports a first MBS or does not support the first MBS. For details, refer to the detailed descriptions of the method examples. Details are not described herein again.

The communication apparatus 1800 may further include at least one memory 1830, configured to store program instructions and/or data. The memory 1830 is coupled to the processor 1820. The coupling in this embodiment of this application may be an indirect coupling or a communication connection between apparatuses, units, or modules in an electrical form, a mechanical form, or another form, and is used for information exchange between the apparatuses, the units, or the modules. The processor 1820 may cooperate with the memory 1830. The processor 1820 may execute the program instructions stored in the memory 1830. At least one of the at least one memory may be included in the processor.

The communication apparatus 1800 may further include a communication interface 1810, configured to communicate with another device by using a transmission medium, so that an apparatus used in the communication apparatus 1800 can communicate with the another device. For example, the communication apparatus 1800 is a first user equipment, and the another device may be a network device or a second user equipment; or the communication apparatus 1800 is a second user equipment, and the another device may be a second user equipment. The processor 1820 may send and receive data through the communication interface 1810. The communication interface 1810 may be specifically a transceiver.

A specific connection medium between the communication interface 1810, the processor 1820, and the memory 1830 is not limited in this embodiment of this application. In this embodiment of this application, the memory 1830, the processor 1820, and the communication interface 1810 are connected through a bus 1840 in FIG. 18. The bus is represented by a thick line in FIG. 18. A manner of connection between other components is merely an example for description, and is not limited thereto. The bus may be classified into an address bus, a data bus, a control bus, and the like. For ease of representation, only one thick line is used to represent the bus in FIG. 18, but this does not mean that there is only one bus or only one type of bus.

In this embodiment of this application, the processor 1820 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in the embodiments of this application. The general purpose processor may be a microprocessor or any conventional processor or the like. The steps of the methods disclosed with reference to embodiments of this application may be directly performed by a hardware processor, or may be performed by using a combination of hardware in the processor and a software module.

In this embodiment of this application, the memory 1830 may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

FIG. 19 shows a communication apparatus 1900 according to an embodiment of this application. The communication apparatus 1900 may be the network device in any one of the foregoing embodiments shown in FIG. 5, FIG. 6, and FIG. 9 to FIG. 15, and can implement functions of the network device in the methods provided in embodiments of this application. Alternatively, the communication apparatus 1900 may be an apparatus that can support the terminal in implementing functions of the network device in the methods provided in embodiments of this application. The communication apparatus 1900 may be a chip system. In this embodiment of this application, the chip system may include a chip, or may include a chip and another discrete component.

In hardware implementation, the communication module 1702 may be a transceiver, and the transceiver is integrated into the communication apparatus 1900 to form a communication interface 1910.

The communication apparatus 1900 includes at least one processor 1920, configured to implement or support the communication apparatus 1900 in implementing the functions of the network device in the methods provided in the embodiments of this application. For example, the processor 1920 may determine, based on first information, that a first cell supports a first MBS or does not support the first MBS. For details, refer to the detailed descriptions of the method examples. Details are not described herein again.

The communication apparatus 1900 may further include at least one memory 1930, configured to store program instructions and/or data. The memory 1930 is coupled to the processor 1920. The coupling in this embodiment of this application may be an indirect coupling or a communication connection between apparatuses, units, or modules in an electrical form, a mechanical form, or another form, and is used for information exchange between the apparatuses, the units, or the modules. The processor 1920 may cooperate with the memory 1930. The processor 1920 may execute the program instructions stored in the memory 1930. At least one of the at least one memory may be included in the processor.

The communication apparatus 1900 may further include a communication interface 1910, configured to communicate with another device by using a transmission medium, so that an apparatus used in the apparatus 1900 can communicate with the another device. For example, the another device may be a second user equipment. The processor 1920 may send and receive data through the communication interface 1910. The communication interface 1910 may be specifically a transceiver.

A specific connection medium between the communication interface 1910, the processor 1920, and the memory 1930 is not limited in this embodiment of this application. In this embodiment of this application, the memory 1930, the processor 1920, and the communication interface 1910 are connected through a bus 1940 in FIG. 19, and the bus is represented by using a bold line in FIG. 19. A connection manner between other components is merely an example for description, and is not limited thereto. The bus may be classified into an address bus, a data bus, a control bus, and the like. For ease of representation, only one thick line is used to represent the bus in FIG. 19, but this does not mean that there is only one bus or only one type of bus.

In this embodiment of this application, the processor 1920 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general purpose processor may be a microprocessor or any conventional processor or the like. The steps of the methods disclosed with reference to embodiments of this application may be directly performed by a hardware processor, or may be performed by using a combination of hardware in the processor and a software module.

In this embodiment of this application, the memory 1930 may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

An embodiment of this application further provides a communication apparatus 2000. The communication apparatus 2000 may be a user equipment, or may be a circuit. The communication apparatus 2000 may be configured to perform actions performed by the first user equipment or the second user equipment in the foregoing method embodiments.

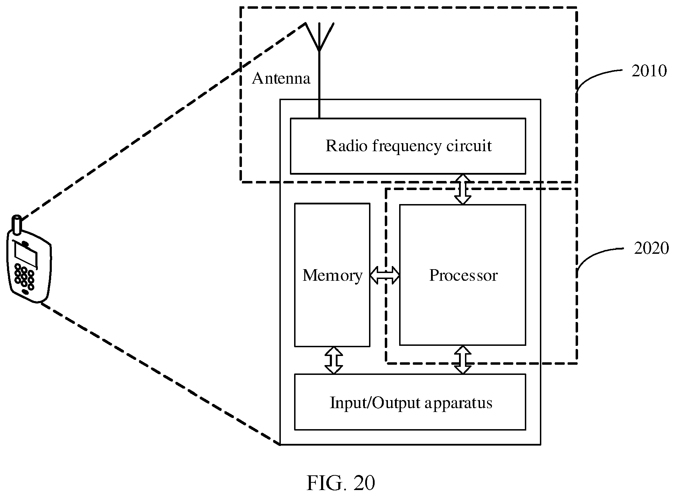

When the communication apparatus is a terminal device, FIG. 20 is a simplified schematic structural diagram of the terminal device. For ease of understanding and figure illustration, an example in which the terminal device is a mobile phone is used in FIG. 20. As shown in FIG. 20, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 20 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 20, the terminal device includes a transceiver unit 2010 and a processing unit 2020. The transceiver unit may also be referred to as a transceiver machine, a transceiver, a transceiver apparatus, or the like. The processing unit may also be referred to as a processor, a processing board, a processing module, a processing apparatus, or the like. Optionally, a component that is in the transceiver unit 2010 and that is configured to implement a receiving function may be considered as a receiving unit, and a component that is in the transceiver unit 2010 and that is configured to implement a sending function may be considered as a sending unit. In other words, the transceiver unit 2010 includes the receiving unit and the sending unit. The transceiver unit sometimes may also be referred to as a transceiver machine, a transceiver, a transceiver circuit, or the like.

It should be understood that the transceiver unit 2010 is configured to perform a sending operation and a receiving operation on the first user equipment (or the second user equipment) side in the foregoing method embodiments, and the processing unit 2020 is configured to perform an operation other than the sending operation and the receiving operation performed by the first user equipment (or the second user equipment) in the foregoing method embodiments.

For example, in an implementation, the transceiver unit 2010 is configured to perform the receiving operation on the second user equipment side in step S602 and step S608 in the embodiment shown in FIG. 6, and/or the transceiver unit 2010 is further configured to perform another sending step or receiving step on the second user equipment side in embodiments of this application. The processing unit 2020 is configured to perform step S604 in the embodiment shown in FIG. 6, and/or the processing unit 2020 is further configured to perform another processing step on the second user equipment side in embodiments of this application.

For another example, in another implementation, the transceiver unit 2010 is configured to perform the receiving operation on the first user equipment side in step S1002 and step S1006 in the embodiment shown in FIG. 10, and/or the transceiver unit 2010 is further configured to perform another sending step or receiving step on the first user equipment side in embodiments of this application. The processing unit 2020 is configured to perform step S1003 in the embodiment shown in FIG. 10, and/or the processing unit 2020 is further configured to perform another processing step on the first user equipment side in embodiments of this application.

When the communication apparatus is a chip, the chip includes a transceiver unit and a processing unit. The transceiver unit may be an input/output circuit or a communication interface. The processing unit is a processor, a microprocessor, or an integrated circuit integrated on the chip.

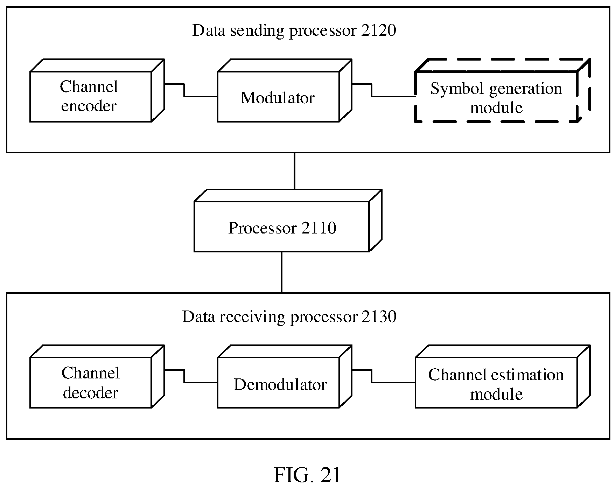

When the communication apparatus in this embodiment is a first user equipment (or a second user equipment), refer to a device shown in FIG. 21. In an example, the device may implement functions similar to those of the processor 1820 in FIG. 18. In FIG. 21, the device includes a processor 2110, a data sending processor 2120, and a data receiving processor 2130. The processing unit 1601 in the foregoing embodiment may be the processor 2110 in FIG. 21, and implements corresponding functions. The transceiver module 1602 in the foregoing embodiment may be the data sending processor 2120 and/or the data receiving processor 2130 in FIG. 21. Although FIG. 21 shows a channel encoder and a channel decoder, it may be understood that the modules are merely examples, and do not constitute a limitation on this embodiment.

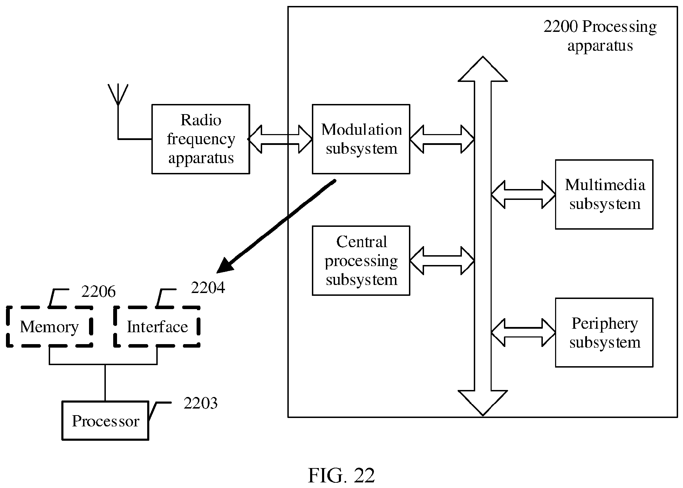

FIG. 22 shows another form of this embodiment. A processing apparatus 2200 includes modules such as a modulation subsystem, a central processing subsystem, and a peripheral subsystem. The communication apparatus in this embodiment may be used as the modulation subsystem. Specifically, the modulation subsystem may include a processor 2203 and an interface 2204. The processor 2203 completes functions of the processing module 1601, and the interface 2204 completes functions of the communication module 1602. In another variant, the modulation subsystem includes a memory 2206, a processor 2203, and a program that is stored in the memory 2206 and that can be run on the processor. When executing the program, the processor 2203 implements the method on the terminal device side in the foregoing method embodiment. It should be noted that the memory 2206 may be nonvolatile or volatile, and may be located inside the modulation subsystem, or may be located in the processing apparatus 2200, provided that the memory 2206 can be connected to the processor 2203.

In another form of this embodiment, a computer-readable storage medium is provided. The computer-readable storage medium stores instructions. When the instructions are executed, the method on the terminal device side in the foregoing method embodiments is performed.

In another form of this embodiment, a computer program product including instructions is provided. When the instructions are executed, the method on the terminal device side in the foregoing method embodiments is performed.

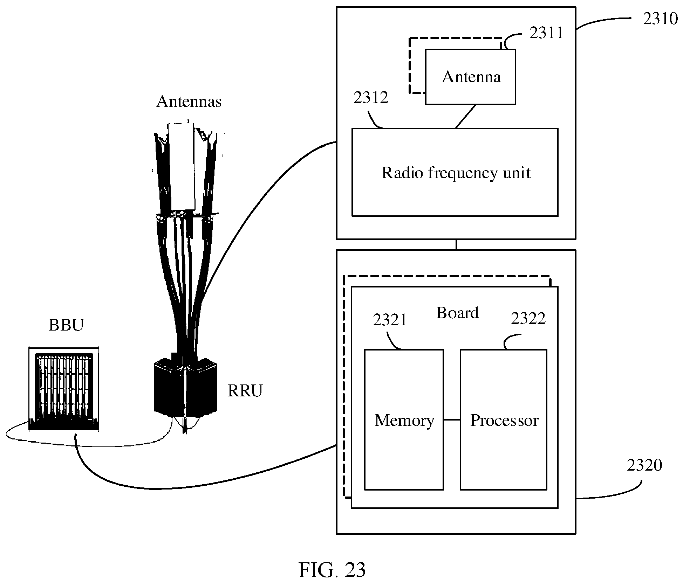

When the apparatus in this embodiment is a network device, the network device may be shown in FIG. 23. An apparatus 2300 includes one or more radio frequency units such as a remote radio unit (remote radio unit, RRU) 2310 and one or more baseband units (baseband units, BBUs) (which may also be referred to as digital units, digital units, DUs) 2320. The RRU 2310 may be referred to as a communication module, and corresponds to the communication module 1702 in FIG. 17. Optionally, the communication module may also be referred to as a transceiver machine, a transceiver circuit, a transceiver, or the like, and may include at least one antenna 2311 and a radio frequency unit 2312. The RRU 2310 is mainly configured to: receive and send radio frequency signals, and perform conversion between a radio frequency signal and a baseband signal, for example, configured to send indication information to a terminal device. The BBU 2310 is mainly configured to: perform baseband processing, control the base station, and so on. The RRU 2310 and the BBU 2320 may be physically disposed together; or may be physically disposed separately, in other words, in a distributed base station.

The BBU 2320 is a control center of the base station, or may be referred to as a processing module. The BBU 2320 may correspond to the processing module 1701 in FIG. 17, and is mainly configured to implement baseband processing functions, for example, channel coding, multiplexing, modulation, and spreading. For example, the BBU (the processing module) may be configured to control the base station to perform the operation procedure related to the network device in the foregoing method embodiments, for example, generate the foregoing indication information.

In an example, the BBU 2320 may include one or more boards, and a plurality of boards may jointly support a radio access network (such as an LTE network) having a single access standard, or may separately support radio access networks (for example, an LTE network, a 5G network, or another network) having different access standards. The BBU 2320 further includes a memory 2321 and a processor 2322. The memory 2321 is configured to store necessary instructions and data. The processor 2322 is configured to control the base station to perform a necessary action, for example, configured to control the base station to perform the operation procedure related to the network device in the foregoing method embodiment. The memory 2321 and the processor 2322 may serve the one or more boards. In other words, a memory and a processor may be disposed on each board. Alternatively, a plurality of boards may share a same memory and a same processor. In addition, a necessary circuit may further be disposed on each board.

An embodiment of this application further provides a computer-readable storage medium, including instructions. When the instructions are run on a computer, the computer is enabled to perform the method performed by the network device in foregoing embodiments.

An embodiment of this application further provides a computer-readable storage medium, including instructions. When the instructions are run on a computer, the computer is enabled to perform the method performed by the first user equipment or the second user equipment in the foregoing embodiments.

An embodiment of this application further provides a computer program product, including instructions. When the computer program product runs on a computer, the computer is enabled to perform the method performed by the network device in the foregoing embodiments.

An embodiment of this application further provides a computer program product, including instructions. When the instructions are run on a computer, the computer is enabled to perform the method performed by the first user equipment or the second user equipment in the foregoing embodiments.

An embodiment of this application provides a chip system. The chip system includes a processor, may further include a memory, and is configured to implement functions of the second user equipment in the foregoing methods. The chip system may include a chip, or may include a chip and another discrete component.

An embodiment of this application provides a chip system. The chip system includes a processor, may further include a memory, and is configured to implement functions of the network device in the foregoing methods. The chip system may include a chip, or may include a chip and another discrete component.

An embodiment of this application provides a chip system. The chip system includes a processor, may further include a memory, and is configured to implement functions of the first user equipment in the foregoing methods. The chip system may include a chip, or may include a chip and another discrete component.

An embodiment of this application provides a communication system. The communication system includes the foregoing network device, first user equipment, and second user equipment.

All or some of the methods in embodiments of this application may be implemented by using software, hardware, firmware, or any combination thereof. When software is used for implementation, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims.

## Claims

1. A communication method, performed by a second user equipment, wherein the second user equipment is a relay user equipment, the method comprising:
receiving (S501, S603) first information from a first user equipment, wherein the first user equipment is a remote user equipment, the first information comprises an identifier of a first multicast broadcast service, MBS, and the first MBS is an MBS that the first user equipment is interested in; and
sending (S502, S607) a first message to the first user equipment, wherein the first message comprises first configuration information, the first configuration information is for configuring a first sidelink, SL, radio bearer between the second user equipment and the first user equipment, and the first SL radio bearer is for transmitting data of the first MBS,
wherein the method further comprises:
receiving (S601) second configuration information from a network device, wherein the second configuration information is for receiving data of a second MBS, the second MBS is an MBS supported by a first cell, and the first cell is a serving cell of the second user equipment;
determining (S604), based on the second configuration information, that the first cell supports the first MBS or does not support the first MBS; and
sending (S605) second indication information to the first user equipment when the first cell does not support the first MBS, wherein the second indication information indicates that the first cell does not support the first MBS, or
sending (S606) first indication information to the first user equipment when the first cell supports the first MBS,
wherein the first indication information indicates that the first cell supports the first MBS.

2. The method according to claim 1, wherein before the receiving first information from a first user equipment, the method further comprises: sending second information to the first user equipment, wherein the second information comprises an identifier of the second MBS.

3. The method according to claim 1 or 2, wherein the method further comprises:
sending a second message to the network device, wherein the second message comprises third indication information, and the third indication information indicates the first MBS; and
receiving a third message from the network device, wherein the third message comprises third configuration information, and the third configuration information is for configuring the first SL radio bearer.

4. The method according to any one of claims 1 to 3, wherein the method further comprises:
receiving (S609) the data of the first MBS from the network device; and
sending (S610) the data of the first MBS to the first user equipment through the first SL radio bearer.

5. The method according to claim 4, wherein the method further comprises:
obtaining at least two pieces of the data of the first MBS from a first protocol layer entity based on the data of the first MBS received from a bottom layer entity, wherein the first protocol layer entity is any one of a first packet data convergence protocol, PDCP, entity, a radio link control layer protocol, RLC, entity, or an adaptation layer entity; and
sending one of the at least two pieces of the data of the first MBS to an upper layer entity of the first protocol layer entity.

6. The method according to claim 1 or 2, wherein the second configuration information comprises one or more of the following: the identifier of the second MBS, information about a first time-frequency resource, or information about a first multimedia broadcast multicast service point to multipoint radio bearer, MRB, wherein the first time-frequency resource is for carrying the second MBS, the first MRB is for transmitting the data of the second MBS, the information about the first MRB comprises first packet data convergence protocol PDCP configuration information, the first PDCP configuration information is for configuring a second PDCP entity, and the second PDCP entity is for receiving the data of the second MBS.

7. A communication method, performed by a first user equipment, wherein the first user equipment is a remote user equipment, comprising:
sending (S501, S603) first information to a second user equipment, wherein the second user equipment is a relay user equipment, the first information comprises an identifier of a first multicast broadcast service, MBS, and the first MBS is an MBS that the first user equipment is interested in; and
receiving (S502, S607) a first message from the second user equipment, wherein the first message comprises first configuration information, the first configuration information is for configuring a first sidelink, SL, radio bearer between the second user equipment and the first user equipment, the first SL radio bearer is for transmitting data of the first MBS,
wherein the method further comprises:
receiving (S605) second indication information from the second user equipment when a first cell does not support the first MBS, wherein the second indication information indicates that the first cell does not support the first MBS; or
receiving (S606) first indication information from the second user equipment when the first cell supports the first MBS, wherein the first indication information indicates that the first cell supports the first MBS; wherein the first cell is a serving cell of the second user equipment.

8. The method according to claim 7, wherein the first message further comprises second packet data convergence protocol, PDCP, configuration information, the second PDCP configuration information is for configuring a third PDCP entity, and the third PDCP entity is for receiving the data of the first MBS.

9. The method according to claim 7 or 8, wherein the method further comprises:
receiving (S610) from the second user equipment the data of the first MBS.

10. A communication apparatus (1800, 1900), comprising a processor (1820, 1920), wherein the processor (1820, 1920) is coupled to a memory (1830, 1930), and the memory (1830, 1930) is configured to store a program or instructions; and when the program or the instructions are executed by the processor (1820, 1920) , the apparatus (1800, 1900) is enabled to perform the method according to any one of claims 1 to 6 or the method according to any one of claims 7 to 9.

11. A communication system, comprising a second user equipment configured to perform the method according to any one of claims 1 to 6, and a first user equipment configured to perform the method according to any one of claims 7 to 9.

12. A computer-readable storage medium, wherein the storage medium stores a computer program or instructions, and when the computer program or the instructions are executed by a communication apparatus (1800, 1900), the method according to any one of claims 1 to 9 is implemented.

13. A computer program product comprising instructions which, when the program is executed by a computer, cause the computer to carry out the method according to any one of claims 1 to 9.

## Patentansprüche

1. Kommunikationsverfahren, das durch eine zweite Benutzereinrichtung durchgeführt wird, wobei die zweite Benutzereinrichtung eine Relay-Benutzereinrichtung ist, wobei das Verfahren umfasst:
Empfangen (S501, S603) erster Informationen von einer ersten Benutzereinrichtung,
wobei die erste Benutzereinrichtung eine entfernte Benutzereinrichtung ist, die ersten Informationen eine Kennung eines ersten Multicast-Broadcast-Service (MBS) umfassen und der erste MBS ein MBS, an dem die erste Benutzereinrichtung interessiert ist, ist; und
Senden (S502, S607) einer ersten Nachricht an die erste Benutzereinrichtung, wobei die erste Nachricht erste Konfigurationsinformationen umfasst, die ersten Konfigurationsinformationen zum Konfigurieren eines ersten Sidelink(SL)-Funkträgers zwischen der zweiten Benutzereinrichtung und der ersten Benutzereinrichtung dienen und der erste SL-Funkträger zum Übertragen von Daten des ersten MBS dient,
wobei das Verfahren ferner umfasst:
Empfangen (S601) zweiter Konfigurationsinformationen von einer Netzwerkvorrichtung, wobei die zweiten Konfigurationsinformationen zum Empfangen von Daten eines zweiten MBS dienen, der zweite MBS ein MBS, der durch eine erste Zelle unterstützt wird, ist und die erste Zelle eine aktive Funkzelle der zweiten Benutzereinrichtung ist;
Bestimmen (S604), basierend auf den zweiten Konfigurationsinformationen, dass die erste Zelle den ersten MBS unterstützt oder den ersten MBS nicht unterstützt; und
Senden (S605) zweiter Anzeigeinformationen an die erste Benutzereinrichtung, wenn die erste Zelle den ersten MBS nicht unterstützt, wobei die zweiten Anzeigeinformationen anzeigen, dass die erste Zelle den ersten MBS nicht unterstützt, oder
Senden (S606) erster Anzeigeinformationen an die erste Benutzereinrichtung, wenn die erste Zelle den ersten MBS unterstützt,
wobei die ersten Anzeigeinformationen anzeigen, dass die erste Zelle den ersten MBS unterstützt.

2. Verfahren nach Anspruch 1, wobei, vor dem Empfangen erster Informationen von einer ersten Benutzereinrichtung, das Verfahren ferner umfasst:
Senden zweiter Informationen an die erste Benutzereinrichtung, wobei die zweiten Informationen eine Kennung des zweiten MBS umfassen.

3. Verfahren nach Anspruch 1 oder 2, wobei das Verfahren ferner umfasst:
Senden einer zweiten Nachricht an die Netzwerkvorrichtung, wobei die zweite Nachricht dritte Anzeigeinformationen umfasst und die dritten Anzeigeinformationen den ersten MBS anzeigen; und
Empfangen einer dritten Nachricht von der Netzwerkvorrichtung, wobei die dritte Nachricht dritte Konfigurationsinformationen umfasst und die dritten Konfigurationsinformationen zum Konfigurieren des ersten SL-Funkträgers dienen.

4. Verfahren nach einem der Ansprüche 1 bis 3, wobei das Verfahren ferner umfasst: Empfangen (S609) der Daten des ersten MBS von der Netzwerkvorrichtung; und Senden (S610) der Daten des ersten MBS an die erste Benutzereinrichtung über den ersten SL-Funkträger.

5. Verfahren nach Anspruch 4, wobei das Verfahren ferner umfasst:
Erhalten von mindestens zwei Teilen der Daten des ersten MBS von einer ersten Protokollschichtentität basierend auf den Daten des ersten MBS, die von einer Entität einer unteren Schicht empfangen werden, wobei die erste Protokollschichtentität eine beliebige von einer ersten Paketdatenkonvergenzprotokoll(PDCP)-Entität, einer Funkverbindungssteuerungsschichtprotokoll(RLC)-Entität oder einer Anpassungsschichtentität ist; und
Senden eines der mindestens zwei Teile der Daten des ersten MBS an eine Entität einer oberen Schicht der ersten Protokollschichtentität.

6. Verfahren nach Anspruch 1 oder 2, wobei die zweiten Konfigurationsinformationen eines oder mehrere der Folgenden umfassen: die Kennung des zweiten MBS, Informationen über eine erste Zeit-Frequenz-Ressource oder Informationen über einen ersten Multimedia-Broadcast-Multicast-Service-Punkt-zu-Mehrpunkt-Funkträger (MRB), wobei die erste Zeit-Frequenz-Ressource zum Tragen des zweiten MBS dient, der erste MRB zum Übertragen der Daten des zweiten MBS dient, die Informationen über den ersten MRB erste Paketdatenkonvergenzprotokoll(PDCP)-Konfigurationsinformationen umfassen, die ersten PDCP-Konfigurationsinformationen zum Konfigurieren einer zweiten PDCP-Entität dienen und die zweite PDCP-Entität zum Empfangen der Daten des zweiten MBS dient.

7. Kommunikationsverfahren, das durch eine erste Benutzereinrichtung durchgeführt wird, wobei die erste Benutzereinrichtung eine entfernte Benutzereinrichtung ist, das umfasst:
Senden (S501, S603) erster Informationen an eine zweite Benutzereinrichtung, wobei die zweite Benutzereinrichtung eine Relay-Benutzereinrichtung ist, die ersten Informationen eine Kennung eines ersten Multicast-Broadcast-Service (MBS) umfassen und der erste MBS ein MBS, an dem die erste Benutzereinrichtung interessiert ist, ist; und
Empfangen (S502, S607) einer ersten Nachricht von der zweiten Benutzereinrichtung, wobei die erste Nachricht erste Konfigurationsinformationen umfasst, die ersten Konfigurationsinformationen zum Konfigurieren eines ersten Sidelink(SL)-Funkträgers zwischen der zweiten Benutzereinrichtung und der ersten Benutzereinrichtung dienen, der erste SL-Funkträger zum Übertragen von Daten des ersten MBS dient.
wobei das Verfahren ferner umfasst:
Empfangen (S605) zweiter Anzeigeinformationen von der zweiten Benutzereinrichtung, wenn eine erste Zelle den ersten MBS nicht unterstützt, wobei die zweiten Anzeigeinformationen anzeigen, dass die erste Zelle den ersten MBS nicht unterstützt; oder
Empfangen (S606) erster Anzeigeinformationen von der zweiten Benutzereinrichtung, wenn die erste Zelle den ersten MBS unterstützt, wobei die ersten Anzeigeinformationen anzeigen, dass die erste Zelle den ersten MBS unterstützt;
wobei die erste Zelle eine aktive Funkzelle der zweiten Benutzereinrichtung ist.

8. Verfahren nach Anspruch 7, wobei die erste Nachricht ferner zweite Paketdatenkonvergenzprotokoll(PDCP)-Konfigurationsinformationen umfasst, die zweiten PDCP-Konfigurationsinformationen zum Konfigurieren einer dritten PDCP-Entität dienen und die dritte PDCP-Entität zum Empfangen der Daten des ersten MBS dient.

9. Verfahren nach Anspruch 7 oder 8, wobei das Verfahren ferner umfasst:
Empfangen (S610) der Daten des ersten MBS von der zweiten Benutzereinrichtung.

10. Kommunikationsausrüstung (1800, 1900), die einen Prozessor (1820, 1920) umfasst, wobei der Prozessor (1820, 1920) mit einem Speicher (1830, 1930) gekoppelt ist, und der Speicher (1830, 1930) konfiguriert ist, um ein Programm oder Anweisungen zu speichern; und wenn das Programm oder die Anweisungen durch den Prozessor (1820, 1920) ausgeführt werden, die Ausrüstung (1800, 1900) in die Lage versetzt wird, das Verfahren nach einem der Ansprüche 1 bis 6 oder das Verfahren nach einem der Ansprüche 7 bis 9 durchzuführen.

11. Kommunikationssystem, das eine zweite Benutzereinrichtung, die konfiguriert ist, um das Verfahren nach einem der Ansprüche 1 bis 6 durchzuführen, und
eine erste Benutzereinrichtung, die konfiguriert ist, um das Verfahren nach einem der Ansprüche 7 bis 9 durchzuführen, umfasst.

12. Computerlesbares Speicherungsmedium, wobei das Speicherungsmedium ein Computerprogramm oder Anweisungen speichert, und wenn das Computerprogramm oder die Anweisungen durch eine Kommunikationsausrüstung (1800, 1900) ausgeführt werden, das Verfahren nach einem der Ansprüche 1 bis 9 implementiert wird.

13. Computerprogrammprodukt, das Anweisungen umfasst, die, wenn das Programm durch einen Computer ausgeführt wird, den Computer veranlassen, das Verfahren nach einem der Ansprüche 1 bis 9 vorzunehmen.

## Revendications

1. Procédé de communication, réalisé par un second équipement utilisateur, dans lequel le second équipement utilisateur est un équipement utilisateur relais, le procédé comprenant :
la réception (S501, S603) de premières informations en provenance d'un premier équipement utilisateur, dans lequel le premier équipement utilisateur est un équipement utilisateur distant, les premières informations comprennent un identifiant d'un premier service de diffusion/multidiffusion, MBS, et le premier MBS est un MBS qui intéresse le premier équipement utilisateur ; et
l'envoi (S502, S607) d'un premier message au premier équipement utilisateur, dans lequel le premier message comprend des premières informations de configuration, les premières informations de configuration permettent de configurer une première porteuse radio de liaison latérale, SL, entre le second équipement utilisateur et le premier équipement utilisateur, et la première porteuse radio SL permet de transmettre des données du premier MBS,
dans lequel le procédé comprend en outre :
la réception (S601) de deuxièmes informations de configuration en provenance d'un dispositif de réseau, dans lequel les deuxièmes informations de configuration permettent de recevoir des données d'un second MBS, le second MBS est un MBS pris en charge par une première cellule, et la première cellule est une cellule de desserte du second équipement utilisateur ;
le fait de déterminer (S604), sur la base des deuxièmes informations de configuration, que la première cellule prend en charge le premier MBS ou ne prend pas en charge le premier MBS ; et
l'envoi (S605) de deuxièmes informations d'indication au premier équipement utilisateur lorsque la première cellule ne prend pas en charge le premier MBS, dans lequel les deuxièmes informations d'indication indiquent que la première cellule ne prend pas en charge le premier MBS, ou
l'envoi (S606) de premières informations d'indication au premier équipement utilisateur lorsque la première cellule prend en charge le premier MBS,
dans lequel les premières informations d'indication indiquent que la première cellule prend en charge le premier MBS.

2. Procédé selon la revendication 1, dans lequel, avant la réception de premières informations en provenance d'un premier équipement utilisateur, le procédé comprend en outre :
l'envoi de secondes informations au premier équipement utilisateur, dans lequel les secondes informations comprennent un identifiant du second MBS.

3. Procédé selon la revendication 1 ou 2, dans lequel le procédé comprend en outre :
l'envoi d'un deuxième message au dispositif de réseau, dans lequel le deuxième message comprend des troisièmes informations d'indication, et les troisièmes informations d'indication indiquent le premier MBS ; et
la réception d'un troisième message en provenance du dispositif de réseau, dans lequel le troisième message comprend des troisièmes informations de configuration, et les troisièmes informations de configuration permettent de configurer la première porteuse radio SL.

4. Procédé selon l'une quelconque des revendications 1 à 3, dans lequel le procédé comprend en outre :
la réception (S609) des données du premier MBS en provenance du dispositif de réseau ; et
l'envoi (S610) des données du premier MBS au premier équipement utilisateur par le biais de la première porteuse radio SL.

5. Procédé selon la revendication 4, dans lequel le procédé comprend en outre :
l'obtention d'au moins deux éléments des données du premier MBS auprès d'une première entité de couche de protocole sur la base des données du premier MBS reçues en provenance d'une entité de couche inférieure, dans lequel la première entité de couche de protocole est l'une quelconque parmi une première entité de protocole de convergence de données par paquets, PDCP, une entité de protocole de couche de commande de liaison radio, RLC, ou une entité de couche d'adaptation ; et
l'envoi de l'un parmi les au moins deux éléments des données du premier MBS à une entité de couche supérieure de la première entité de couche de protocole.

6. Procédé selon la revendication 1 ou 2, dans lequel les deuxièmes informations de configuration comprennent un ou plusieurs parmi les éléments suivants : l'identifiant du second MBS, des informations concernant une première ressource temps-fréquence ou des informations concernant une première porteuse radio point à multipoint de service de diffusion/multidiffusion multimédia, MRB, dans lequel la première ressource temps-fréquence permet de transporter le second MBS, la première MRB permet de transmettre les données du second MBS, les informations concernant la première MRB comprennent des informations de configuration de premier protocole de convergence de données par paquets, PDCP, les premières informations de configuration PDCP permettent de configurer une deuxième entité PDCP et la deuxième entité PDCP permet de recevoir les données du second MBS.

7. Procédé de communication, réalisé par un premier équipement utilisateur, dans lequel le premier équipement utilisateur est un équipement utilisateur distant, comprenant :
l'envoi (S501, S603) de premières informations à un second équipement utilisateur, dans lequel le second équipement utilisateur est un équipement utilisateur relais, les premières informations comprennent un identifiant d'un premier service de diffusion/multidiffusion, MBS, et le premier MBS est un MBS qui intéresse le premier équipement utilisateur ; et
la réception (S502, S607) d'un premier message en provenance du second équipement utilisateur, dans lequel le premier message comprend des premières informations de configuration, les premières informations de configuration permettent de configurer une première porteuse radio de liaison latérale, SL, entre le second équipement utilisateur et le premier équipement utilisateur, la première porteuse radio SL permet de transmettre des données du premier MBS,
dans lequel le procédé comprend en outre :
la réception (S605) de deuxièmes informations d'indication en provenance du second équipement utilisateur lorsqu'une première cellule ne prend pas en charge le premier MBS, dans lequel les deuxièmes informations d'indication indiquent que la première cellule ne prend pas en charge le premier MBS ; ou
la réception (S606) de premières informations d'indication en provenance du second équipement utilisateur lorsque la première cellule prend en charge le premier MBS, dans lequel les premières informations d'indication indiquent que la première cellule prend en charge le premier MBS ; dans lequel la première cellule est une cellule de desserte du second équipement utilisateur.

8. Procédé selon la revendication 7, dans lequel le premier message comprend en outre des deuxièmes informations de configuration de protocole de convergence de données par paquets, PDCP, les deuxièmes informations de configuration PDCP permettent de configurer une troisième entité PDCP, et la troisième entité PDCP permet de recevoir des données du premier MBS.

9. Procédé selon la revendication 7 ou 8, dans lequel le procédé comprend en outre :
la réception (S610) en provenance du second équipement utilisateur des données du premier MBS.

10. Appareil de communication (1800, 1900), comprenant un processeur (1820, 1920), dans lequel le processeur (1820, 1920) est couplé à une mémoire (1830, 1930), et la mémoire (1830, 1930) est configurée pour stocker un programme ou des instructions ; et lorsque le programme ou les instructions sont exécutés par le processeur (1820, 1920), l'appareil (1800, 1900) est activé pour réaliser le procédé selon l'une quelconque des revendications 1 à 6 ou le procédé selon l'une quelconque des revendications 7 à 9.

11. Appareil de communication, comprenant un second équipement utilisateur configuré pour réaliser le procédé selon l'une quelconque des revendications 1 à 6, et
un premier équipement utilisateur configuré pour réaliser le procédé selon l'une quelconque des revendications 7 à 9.

12. Support de stockage lisible par ordinateur, dans lequel le support de stockage stocke un programme informatique ou des instructions, et lorsque le programme informatique ou les instructions sont exécutés par un appareil de communication (1800, 1900), le procédé selon l'une quelconque des revendications 1 à 9 est mis en œuvre.

13. Produit-programme d'ordinateur comprenant des instructions qui, lorsque le programme est exécuté par un ordinateur, amènent l'ordinateur à effectuer le procédé selon l'une quelconque des revendications 1 à 9.
